# EUROPEAN PATENT APPLICATION

(11) **EP 4 510 107 A1**
(43) Date of publication of application: **19.02.2025**
(21) Application number: 23788157.8
(22) Date of filing: 27.03.2023
(51) Int. Cl.: G08G 1/09, G05D 1/00, G05D 1/02, G08G 1/00

(54) **INFORMATION PROCESSING METHOD, INFORMATION PROCESSING DEVICE, AND PROGRAM**

(30) Priority: 15.04.2022 JP 2022067709
(71) Applicant: Panasonic Intellectual Property Management Co., Ltd., Kadoma-shi, Osaka 571-0057 (JP)
(72) Inventor: SATO, Masaki, Kadoma-shi, Osaka 571-0057 (JP); KUHARA, Shunsuke, Kadoma-shi, Osaka 571-0057 (JP)
(74) Representative: Novagraaf International SA
(86) International application number: PCT/JP2023/012210
(87) International publication number: WO 2023/199737

(57) **Abstract**

An information processing method includes: obtaining travel information on travel of mobile bodies capable of autonomous travel and remote operation and/or monitoring (S11); predicting, based on the travel information and location information on a first area in which the remote operation and/or monitoring is required, a first mobile body having a travel route scheduled to pass through the first area and being to enter the first area (S12); identifying, based on the travel information and the location information, a second mobile body having a travel route scheduled to pass through the first area (S13); determining whether the second mobile body catches up with the first mobile body before the first mobile body enters the first area (S14); and outputting instruction information for causing the second mobile body to perform following control to follow the first mobile body, when the second mobile body catches up with the first mobile body (S15).

## Description

### [Technical Field]

The present disclosure relates to an information processing method, an information processing device, and a program.

### [Background Art]

Recent years have seen development of food delivery services and passenger pickup and drop-off services using mobile bodies, such as vehicles or robots, that autonomously travel on public roads.

On a path where an obstacle, like a fallen object, is present, such a vehicle or robot is unable to autonomously travel for now unfortunately and has to be remotely operated to stop, for example.

In response to this, Patent Literature (PTL) 1 discloses a method of generating operator command data used by an operator to remotely operate an autonomous vehicle, for example.

### [Citation List]

### [Patent Literature]

[PTL 1] Japanese Unexamined Patent Application Publication (Translation of PCT Application) No. 2019-505059

### [Summary of Invention]

### [Technical Problem]

However, when at least two mobile bodies are located simultaneously in a risk area in which at least one of remote operation or remote monitoring is required, one of the at least two mobile bodies cannot be remotely operated or remotely monitored using the method disclosed in PTL 1. Thus, for the mobile body that cannot be remotely operated or remotely monitored and thus makes a safety stop in the risk area, the remote operation cannot be reliably performed.

In view of the above issue, it is an object of the present disclosure to provide an information processing method and so forth that reliably enable a remote operation in a risk area.

### [Solution to Problem]

In accordance with an aspect of the present disclosure, an information processing method includes: obtaining travel information on travel of at least two mobile bodies that are capable of autonomous travel and operable by at least one of remote operation or remote monitoring; predicting, based on the travel information and location information on a first area in which at least one of the remote operation or the remote monitoring is required, a first mobile body that has a travel route scheduled to pass through the first area and that is scheduled to enter the first area, among the at least two mobile bodies; identifying, based on the travel information and the location information, a second mobile body that is different from the first mobile body and that has a travel route scheduled to pass through the first area; determining whether the second mobile body will catch up with the first mobile body before the first mobile body enters the first area; and outputting, to the second mobile body, instruction information for causing the second mobile body to perform following control to follow the first mobile body, when the determining is made that the second mobile body will catch up with the first mobile body before the first mobile body enters the first area.

General or specific aspects of the present disclosure may be implemented to a system, a device, a method, an integrated circuit, a computer program, a computer-readable recording medium such as a Compact Disc-Read Only Memory (CD-ROM), or any given combination thereof. The recording medium may be a non-transitory recording medium.

### [Advantageous Effects of Invention]

The information processing method and so forth according to the present embodiment reliably enable a remote operation in a risk area.

It should be noted that further advantages and effects of an aspect of the present disclosure are apparent from the Description and the Drawings. The advantages and/or effects are provided by the embodiments and the features disclosed in the Description and the Drawings. However, all of them is not necessary to obtain one or more same features.

### [Brief Description of Drawings]

[FIG. 1]

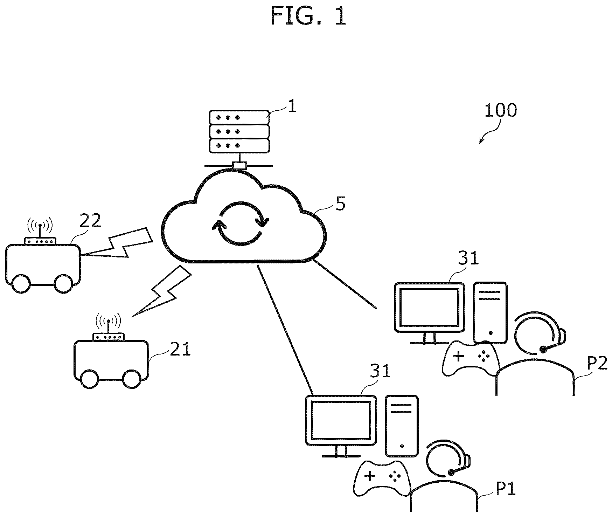

   FIG. 1 is a conceptual diagram illustrating a remote control system according to Embodiment 1.
[FIG. 2]

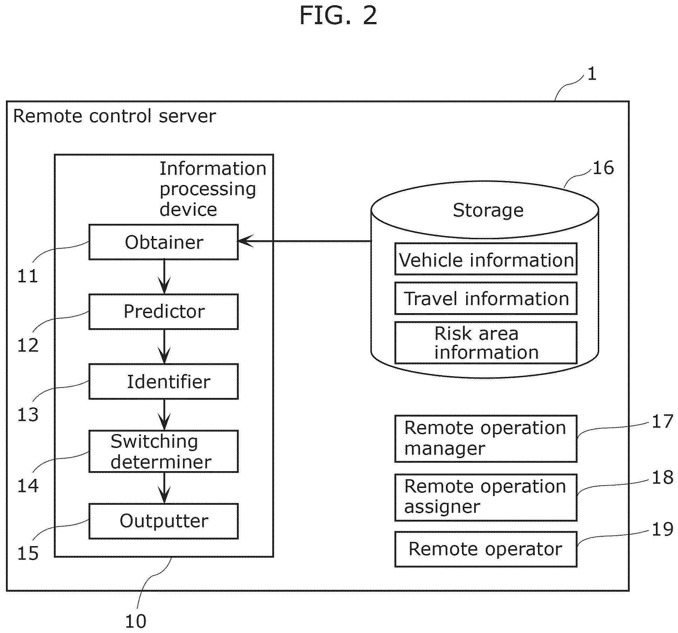

   FIG. 2 is a block diagram illustrating an example of a configuration of a remote control server according to Embodiment 1.
[FIG. 3]

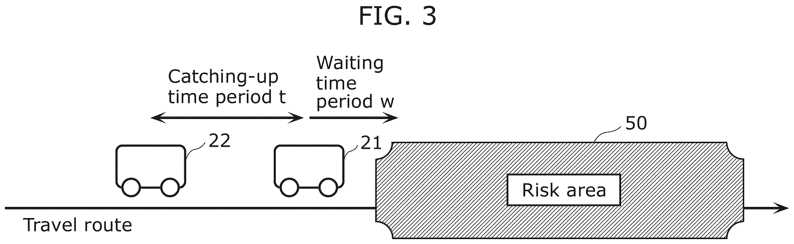

   FIG. 3 is a diagram illustrating a waiting time period and a catching-up time period according to Embodiment 1.
[FIG. 4A]

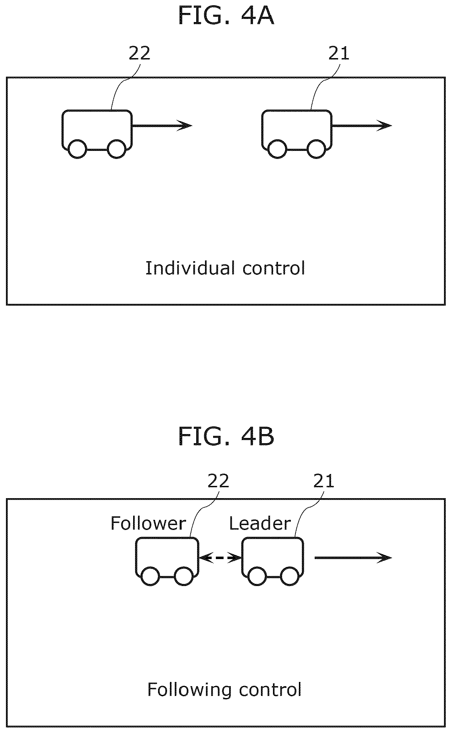

   FIG. 4A is a diagram illustrating individual control according to Embodiment 1.
[FIG. 4B]
   FIG. 4B is a diagram illustrating following control according to Embodiment 1.
[FIG. 5]

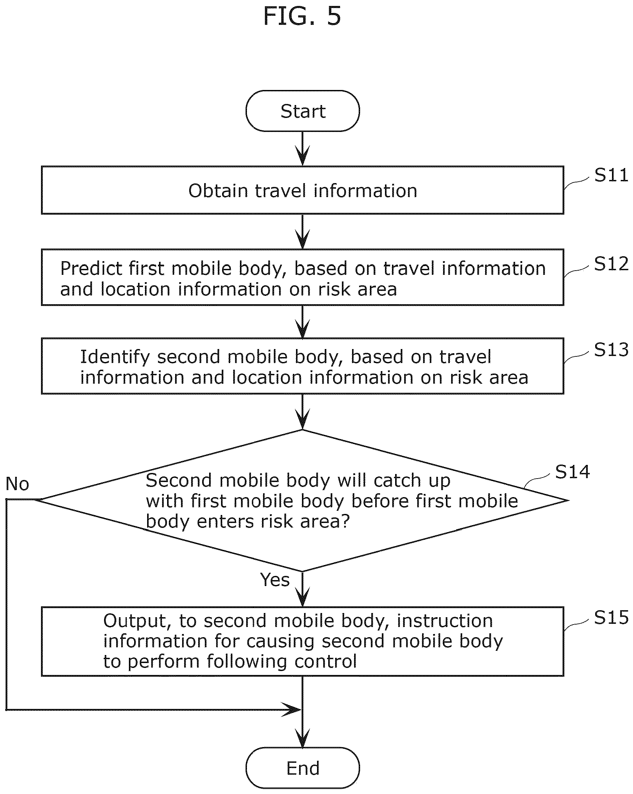

   FIG. 5 is a flowchart illustrating an operation performed by an information processing device according to Embodiment 1.
[FIG. 6]

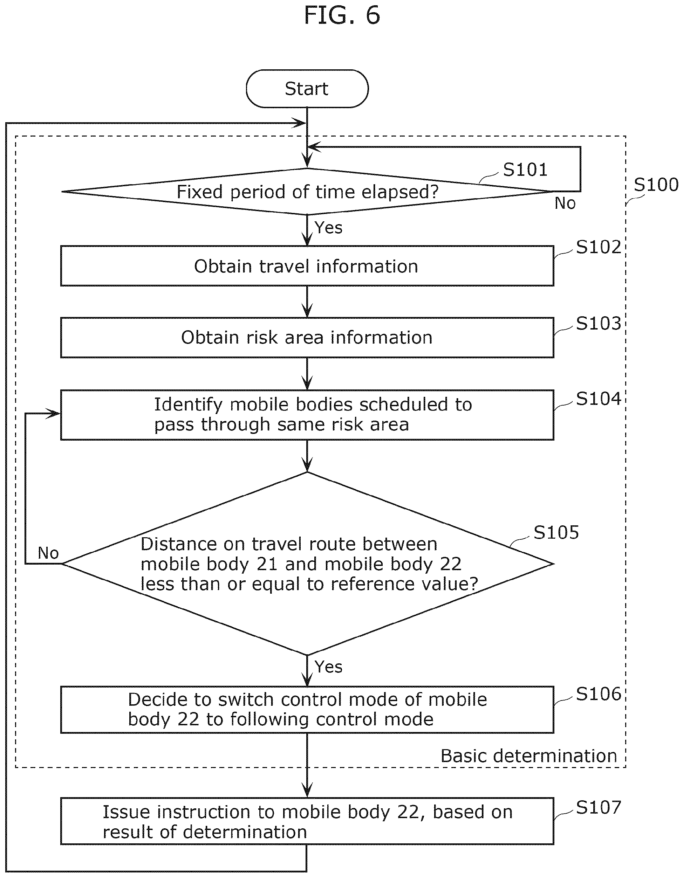

   FIG. 6 is a flowchart illustrating an example of the operation performed by the information processing device according to Embodiment 1.
[FIG. 7]

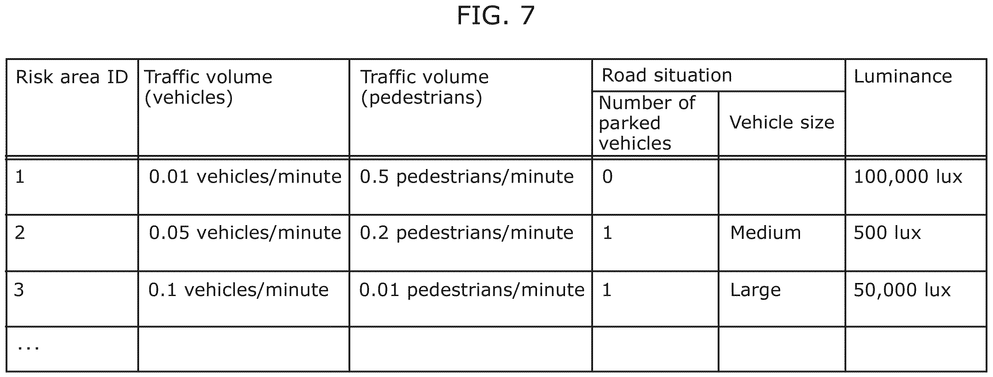

   FIG. 7 is a diagram illustrating an example of remote-operation risk information according to Embodiment 2.
[FIG. 8]

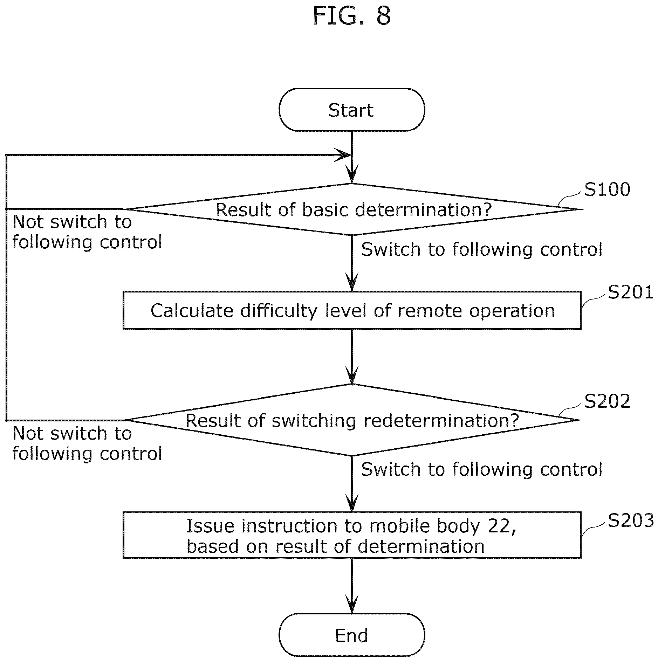

   FIG. 8 is a flowchart illustrating an example of an operation performed by an information processing device according to Embodiment 2.
[FIG. 9]

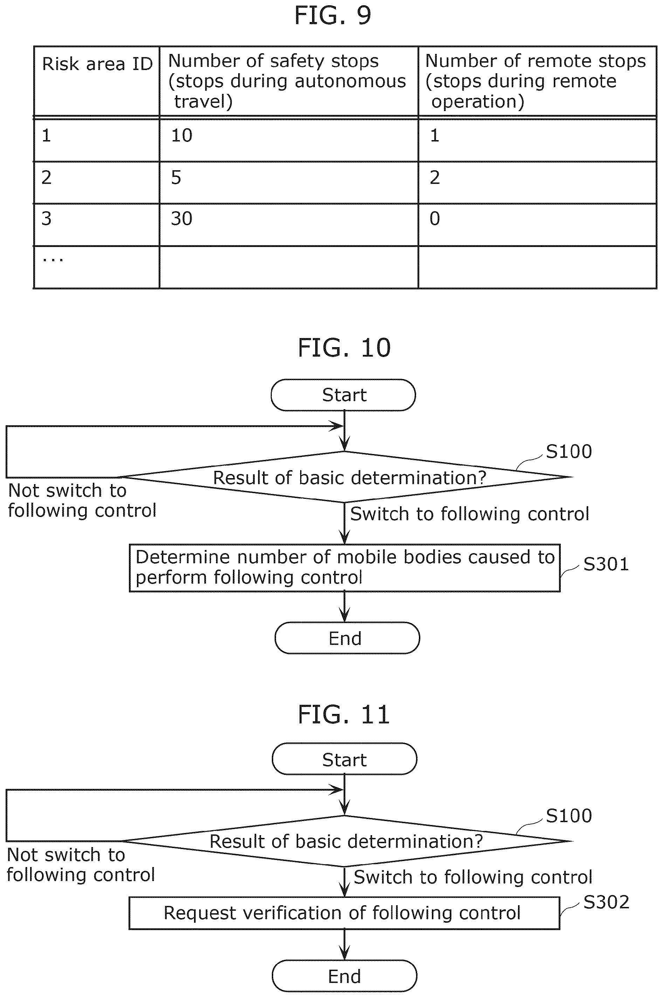

   FIG. 9 is a diagram illustrating an example of a past history according to Variation 1 of Embodiment 2.
[FIG. 10]
   FIG. 10 is a flowchart illustrating an example of basic determination processing performed by an information processing device according to Embodiment 3.
[FIG. 11]
   FIG. 11 is a flowchart illustrating another example of the basic determination processing performed by the information processing device according to Embodiment 3.

### [Description of Embodiments]

In order to solve the above problems, in accordance with an aspect of the present disclosure, an information processing method according to Example 1 includes: obtaining travel information on travel of at least two mobile bodies that are capable of autonomous travel and operable by at least one of remote operation or remote monitoring; predicting, based on the travel information and location information on a first area in which at least one of the remote operation or the remote monitoring is required, a first mobile body that has a travel route scheduled to pass through the first area and that is scheduled to enter the first area, among the at least two mobile bodies; identifying, based on the travel information and the location information, a second mobile body that is different from the first mobile body and that has a travel route scheduled to pass through the first area; determining whether the second mobile body will catch up with the first mobile body before the first mobile body enters the first area; and outputting, to the second mobile body, instruction information for causing the second mobile body to perform following control to follow the first mobile body, when the determining is made that the second mobile body will catch up with the first mobile body before the first mobile body enters the first area.

With this, the mobile body targeted for the remote operation or the remote monitoring in the first area that is the risk area can be narrowed down to the first mobile body. Thus, the remote operation can be reliably performed on the mobile body in the risk area. Furthermore, by remotely operating only the first mobile body, the operator is able to cause the second mobile body performing the following control to travel together with the first mobile body. Thus, the second mobile body autonomously traveling does not need to be kept waiting instead of entering the first area, until the first mobile body passes through the first area. This increases the utilization rate of the second mobile body. More specifically, allowing the plurality of mobile bodies to enter the first area reduces the stop duration of the mobile body, for instance, and thus increases the utilization rate.

An information processing method according to Example 2 is the information processing method according to Example 1 further including: outputting, to the second mobile body, instruction information for causing the second mobile body to continue performing individual control to travel independently of the first mobile body, when the determining is made that the second mobile body will not catch up with the first mobile body before the first mobile body enters the first area.

With this, the control mode is adaptively switchable between the following control mode and the individual control mode, depending on whether the second mobile body will catch up with the first mobile body. When the second mobile will not catch up with the first mobile body, each of the first mobile body and the second mobile body can be caused to travel independently with efficiency.

An information processing method according to Example 3 is the information processing method according to Example 1 or 2, wherein in the determining whether the second mobile body will catch up with the first mobile body, whether the second mobile body will catch up with the first mobile body is determined based on (i) a waiting time period that is a time period from when the first mobile body reaches the first area to when the first mobile body enters the first area and a catching-up time period that is a time period from a first time at which the first mobile body reaches the first area to a second time at which the second mobile body reaches a location of the first mobile body, or based on (ii) a distance on a route between the first mobile body and the second mobile body and a reference value for the distance.

With this, whether the second mobile body is caused to perform the following control can be easily determined based on (i) a relationship between the waiting time period and the catching-up time period or (ii) a relationship between the distance and the threshold value.

An information processing method according to Example 4 is the information processing method according to Example 3, wherein the second time is a time at which the second mobile body reaches the location of the first mobile body by autonomously traveling at an accelerated speed.

With this, more second mobile bodies are allowed to perform the following control. This reduces the number of second mobile bodies kept waiting instead of entering the first area until the first mobile body passes through the first area. Thus, the utilization rate of the second mobile body can be increased. More specifically, allowing the plurality of mobile bodies to enter the first area in more cases reduces the stop duration of the mobile body, for instance, and thus further increases the utilization rate.

An information processing method according to Example 5 is the information processing method according to any one of Examples 1 to 4, further including: when the determining is made that the second mobile body will catch up with the first mobile body before the first mobile body enters the first area, calculating, based on a situation of the first area, a risk caused by the following control performed by the second mobile body in the first area, and determining whether the risk calculated exceeds a predetermined reference value, wherein when the determining is made that the risk calculated exceeds the predetermined reference value, the outputting of the instruction information for causing the second mobile body to perform the following control is not performed.

With this, the second mobile body is not caused to perform the following control when the travel of the first mobile body and the second mobile body together in the first area increases the risk of, for example, safety stop. Thus, the mobile body targeted for the remote operation in the first area can be narrowed down only to the first mobile body that is remotely operable with safety and reliability.

An information processing method according to Example 6 is the information processing method according to Example 5, wherein the risk indicates a difficulty level of performing the remote operation on the first mobile body while causing the second mobile body to perform the following control in the first area.

With this, the second mobile body is not caused to perform the following control when the difficulty level for the first mobile body and the second mobile body to travel together in the first area is high. Thus, the mobile body targeted for the remote operation in the first area can be narrowed down only to the first mobile body that is remotely operable with reliability.

An information processing method according to Example 7 is the information processing method according to any one of Examples 1 to 6, further including: when the determining is made that the second mobile body will catch up with the first mobile body before the first mobile body enters the first area, determining whether a total number of times that is included in a past history of a mobile body which previously passed through the first area and that indicates a total number of stops having been made by the mobile body autonomously traveling in the first area exceeds a threshold value, wherein when the determining is made that the total number of times exceeds the threshold value, the outputting of the instruction information for causing the second mobile body to perform the following control is not performed.

With this, when the past history indicates that the mobile body has made stops a certain number of times while traveling in the first area, the difficulty level for the first mobile body and the second mobile body to travel together in the first area is assumed to be high. On this account, the second mobile body is not caused to perform the following control. Thus, the mobile body targeted for the remote operation in the first area can be narrowed down only to the first mobile body that is remotely operable with reliability.

An information processing method according to Example 8 is the information processing method according to any one of Examples 1 to 7, further including: when the determining is made that the second mobile body will catch up with the first mobile body before the first mobile body enters the first area, determining whether a length of a scheduled passage route that is a route scheduled to be taken by the first mobile body to pass through the first area exceeds a predetermined value, wherein when the determining is made that the length of the scheduled passage route exceeds the predetermined value, the outputting of the instruction information for causing the second mobile body to perform the following control is not performed.

With this, when the route taken by the mobile body to pass through the first area has a certain length or more, the operation difficulty level for the operator to perform the remote operation for causing the first mobile body and the second mobile body to travel together in the first area is assumed to be high. On this account, the second mobile body is not caused to perform the following control. Thus, the mobile body targeted for the remote operation in the first area can be narrowed down only to the first mobile body that is remotely operable with reliability.

An information processing method according to Example 9 is the information processing method according to any one of Examples 1 to 8, further including: when the determining is made that the second mobile body will catch up with the first mobile body before the first mobile body enters the first area, checking a scheduled passage route that is a route scheduled to be taken by the first mobile body to pass through the first area; and determining whether or not a proportion of one or more straight roads included in the scheduled passage route is at least a threshold value, herein when the determining is made that the proportion of the one or more straight roads included in the scheduled passage route does not exceed the threshold value, the outputting of the instruction information for causing the second mobile body to perform the following control is not performed.

With this, when the route taken by the mobile body to pass through the first area has many right and left turns, the operation difficulty level for the operator to perform the remote operation for causing the first mobile body and the second mobile body to travel together in the first area is assumed to be high. On this account, the second mobile body is not caused to perform the following control. Thus, the mobile body targeted for the remote operation in the first area can be narrowed down only to the first mobile body that is remotely operable with reliability.

An information processing method according to Example 10 is the information processing method according to any one of Examples 1 to 9, further including: when the determining is made that the second mobile body will catch up with the first mobile body before the first mobile body enters the first area, determining whether the first mobile body is able to wait in a space in a vicinity of the travel route before entering the first area until the second mobile body catches up with the first mobile body, wherein when the determining is made that the first mobile body is unable to wait, the outputting of the instruction information for causing the second mobile body to perform the following control is not performed.

For example, when there is no space allowing the first mobile body to wait for the second mobile body in because of, for example, the high traffic volume or the narrow road width, it is assumed that the first mobile body is unable to safely wait until the second mobile body catches up. On this account, even when the second mobile body will catchup with the first mobile body before the first mobile body enters the first area, the second mobile body is not caused to perform the following control in view of the safety of the first mobile body. Thus, the mobile body targeted for the remote operation in the first area can be narrowed down only to the first mobile body that is remotely operable with reliability.

An information processing method according to Example 11 is the information processing method according to any one of Examples 1 to 10, further including: when the determining is made that the second mobile body will catch up with the first mobile body before the first mobile body enters the first area, determining whether a skill level of an operator who performs at least one of the remote operation or the remote monitoring on the first mobile body in the first area exceeds a predetermined level, wherein when the determining is made that the skill level does not exceed the predetermined level, the outputting of the instruction information for causing the second mobile body to perform the following control is not performed.

For example, when the skill level of the operator is low because this operator is a newcomer for example, it may be expected that this operator is unable to cause the first mobile body and the second mobile body to travel safely together when remotely operating the first mobile body followed by the second mobile body. On this account, even when the second mobile body will catch up with the first mobile body before the first mobile body enters the first area, the second mobile body is not caused to perform the following control in view of the skill level of the operator. Thus, the mobile body targeted for remote operation in the first area can be narrowed down only to the first mobile body that is remotely operable with reliability.

An information processing method according to Example 12 is the information processing method according to any one of Examples 1 to 11, wherein in the determining of the second mobile body, each of a plurality of second mobile bodies is determined as the second mobile body, and the information processing method further includes: determining a total number of at least one second mobile body caused to perform the following control among the plurality of second mobile bodies when the determining is made that the plurality of second mobile bodies will catch up with the first mobile body before the first mobile body enters the first area, wherein the outputting of the instruction information for causing the at least one second mobile body defined by the total number determined to perform the following control is performed.

For example, when a large number of second mobile bodies follow the first mobile body, it may be expected that the first mobile body and the second mobile bodies are unable to travel safely together, depending on the skill level of the operator or the situation of the travel route. On this account, even when the plurality of second mobile bodies will catch up with the first mobile body before the first mobile body enters the first area, the determination of the number of second mobile bodies that are caused to follow the first mobile body enables the first mobile body and the determined number of second mobile bodies to travel safely together.

An information processing method according to Example 13 is the information processing method according to any one of Examples 1 to 12, wherein in the determining of the second mobile body, each of a plurality of second mobile bodies is determined as the second mobile body, and the information processing method further includes: selecting a second mobile body caused to perform the following control from among the plurality of second mobile bodies when the determining is made that the plurality of second mobile bodies will catch up with the first mobile body before the first mobile body enters the first area, wherein in the outputting, the instruction information for causing the second mobile body selected to perform the following control is outputted to the second mobile body selected.

With this, even when the plurality of second mobile bodies will catch up with the first mobile body before the first mobile body enters the first area, the selection of the second mobile bodies caused to follow the first mobile body enables the first mobile body and the second mobile bodies selected to travel safely together.

Furthermore, the information processing method according to Example 14 may be the information processing method according to any one of Examples 1 to 13. According to the information processing method, the travel information may include the information indicating the travel route of the mobile body, the information indicating the location of the mobile body, and the information indicating the travel speed of the mobile body.

With this, the timing when the first mobile body enters the first area can be easily predicted. In addition to this, the second mobile body scheduled to pass through the first area can be easily determined, and whether the second mobile body will catch up with the first mobile body can be easily determined.

Furthermore, the information processing method according to Example 15 may be the information processing method according to any one of Examples 1 to 14. According to the information processing method, each of at least one first mobile body may be predicted as the first mobile body and the number of the at least one first mobile body may be less than or equal to the number of operators who performs at least one of the remote operation or the remote monitoring.

With this, the number of first mobile bodies is less than or equal to the number of operators who performs at least one of the remote operation or the remote monitoring. Thus, the remote operation can be reliably performed on the mobile body in the risk area.

In accordance with another aspect of the present disclosure, an information processing device according to Examiner 16 includes: an obtainer that obtains travel information on travel of at least two mobile bodies that are capable of autonomous travel and operable by at least one of remote operation or remote monitoring; a predictor that predicts, based on the travel information and location information on a first area in which at least one of the remote operation or the remote monitoring is required, a first mobile body that has a travel route scheduled to pass through the first area and that is scheduled to enter the first area, among the at least two mobile bodies; an identifier that identifies, based on the travel information and the location information, a second mobile body that is different from the first mobile body and that has a travel route scheduled to pass through the first area; a determiner that determines whether the second mobile body will catch up with the first mobile body before the first mobile body enters the first area; and an outputter that outputs, to the second mobile body, instruction information for causing the second mobile body to perform following control to follow the first mobile body, when the determiner determines that the second mobile body will catch up with the first mobile body before the first mobile body enters the first area.

With this, the same advantageous effects as those achieved by the information processing method described above can be achieved.

In accordance with still another aspect of the present disclosure, a computer program according to Example 17 is a computer program for causing a computer to execute: obtaining travel information on travel of at least two mobile bodies that are capable of autonomous travel and operable by at least one of remote operation or remote monitoring; predicting, based on the travel information and location information on a first area in which at least one of the remote operation or the remote monitoring is required, a first mobile body that has a travel route scheduled to pass through the first area and that is scheduled to enter the first area, among the at least two mobile bodies; identifying, based on the travel information and the location information, a second mobile body that is different from the first mobile body and that has a travel route scheduled to pass through the first area; determining whether the second mobile body will catch up with the first mobile body before the first mobile body enters the first area; and outputting, to the second mobile body, instruction information for causing the second mobile body to perform following control to follow the first mobile body, when the determining is made that the second mobile body will catch up with the first mobile body before the first mobile body enters the first area.

With this, the same advantageous effects as those achieved by the information processing method described above can be achieved.

Hereinafter, certain exemplary embodiments will be described in detail with reference to the accompanying Drawings.

The following embodiments are general or specific examples of the present disclosure. The numerical values, shapes, materials, elements, arrangement and connection configuration of the elements, steps, the order of the steps, etc., described in the following embodiments are merely examples, and are not intended to limit the present disclosure. Among elements in the following embodiments, those not described in any one of the independent claims indicating the broadest concept of the present disclosure are described as optional elements.

Note that the respective figures are schematic diagrams and are not necessarily precise illustrations. Additionally, components that are essentially the same share like reference signs in the figures.

### [Embodiment 1]

The following describes an information processing device, a remote control system, and so forth according to Embodiment 1.

### [1 Configuration of Remote Control System 100]

FIG. 1 is a conceptual diagram illustrating remote control system 100 according to Embodiment 1.

Remote control system 100 is a system that monitors at least two mobile bodies for remote operation and issues an instruction to remotely operate the at least two mobile bodies. Remote control system 100 reduces simultaneous entries of a plurality of mobile bodies into an area with a high risk of safety stop (that is, a risk area), through management of the plurality of mobile bodies by limiting the number of mobile bodies allowed to enter the risk area to the number less than the number of operators capable of remote operation. This reduces the risk that the number of mobile bodies requiring remote operations exceeds the number of operators.

Remote control system 100 illustrated in FIG. 1 includes remote control server 1, at least two mobile bodies 21 and 22, and a plurality of remote operation devices 31.

Remote control server 1, at least two mobile bodies 21 and 22, and the plurality of remote operation devices 31 are communicatively connected to each other via network 5. Note that network 5 is a predetermined wired or wireless communication line, such as the Internet or a dedicated line. Remote control system 100 according to the present embodiment includes two mobile bodies (mobile bodies 21 and 22) and two remote operation devices 31 in the following description as illustrated in FIG. 1 for example. However, this is not intended to be limiting. Remote control system 100 may include at least two mobile bodies and at least two remote operation devices 31.

### [1. 1 Mobile Body]

Each of the at least two mobile bodies is capable of autonomous travel and operable by at least one of remote operation or remote monitoring. To be more specific, each of the at least two mobile bodies is switchable between an autonomous mode and a remote operation mode in which the mobile body is remotely operated. The autonomous mode is further selectable from among: an individual control mode in which the mobile body travels independently; a remote monitoring mode in which the mobile body is remotely monitored; and a following control mode in which the mobile body travels by following a target mobile body. In this way, the control mode of each of the at least two mobile bodies is switchable. Note that the individual control mode and the following control mode are described in detail later. In the event of an unexpected incident or unsafe situation detected during travel in the autonomous mode, each of the at least two mobile bodies makes a safety stop to ensure the safety. Examples of the unsafe situation include: a situation in which a pedestrian, a bicycle, or an automobile for instance approaches; and a situation where a vehicle is parked on the road along a travel route. Each of the at least two mobile bodies may be a vehicle, a robot, or a drone that is capable of autonomously traveling to reach a destination, for example.

Furthermore, each of the at least two mobile bodies may include a camera and transmit data obtained with the camera to remote control server 1. Moreover, each of the at least two mobile bodies may include a positioning system, such as a global positioning system (GPS), and transmit information indicating the current location of the mobile body to remote control server 1.

Among the at least two mobile bodies in the present embodiment, mobile body 21 is a first mobile body that has a travel route scheduled to pass through a first area that is a risk area, and that enters the first area. Among the at least two mobile bodies, mobile body 22 is a second mobile body that is different from the first mobile body, and that has a travel route scheduled to pass through the first area. In the present embodiment, mobile body 21 that is the first mobile body reaches the first area before mobile body 22 that is the second mobile body.

Here, the risk area is described.

The risk area is an area in which at least one of remote operation or remote monitoring is required to be performed on a mobile body passing through this area, and may also be referred to as the first area. Examples of the risk area include: an area in the vicinity of an intersection; a high-traffic area; an area in which a mobile body has made safety stops many times in the past; and a narrow road. Thus, the risk area is an area that has a high stop risk where the mobile body makes a safety stop during autonomous travel and requests for a remote operation.

In the present embodiment, the number of mobile bodies allowed to pass through the risk area is less than or equal to the number of operators who perform at least one of remote operation or remote monitoring via remote operation devices 31. This is because the continuation of safe operations of the mobile bodies needs to be ensured. For this reason, in the risk area, all mobile bodies except the mobile body remotely operated may need to stop traveling, or stop and wait before entering the risk area.

Note that the mobile body need not be remotely operated in the risk area. For example, when an operator is able to readily perform the remote operation as an intervention on the mobile body in response to a remote operation request from the mobile body, the mobile body may autonomously travel in the risk area. More specifically, a plurality of mobile bodies the number of which is less than or equal to the number of operators may autonomously travel simultaneously in the risk area, for example.

Alternatively, the autonomous travel of a mobile body that is not remotely operated in the risk area may be permitted with a restriction on traveling speed, for example. Alternatively, a mobile body in the following control mode may autonomously travel by following another mobile body that is remotely operated in the risk area, for example. Under such control, the plurality of mobile bodies the number of which exceeds the number of operators may simultaneously pass through the risk area.

### [1. 2 Remote Operation Device]

Remote operation device 31 obtains and displays travel information and vehicle information on the at least two mobile bodies. Remote operation device 31 is able to remotely monitor or remotely operate a mobile body through operation performed by one operator (such as P1 or P2). To be more specific, remote operation device 31 transmits a control instruction for remote operation that is inputted by the operator who performs the remote operation, to the mobile body that is targeted for the remote operation. Remote operation device 31 may transmit the control instruction for remote operation to the mobile body via outputter 15.

For example, remote operation device 31 includes: an operating section for remotely operating a mobile body; and a display that displays, based on data from the camera of the mobile body, an image of an area around the mobile body. The operator is able to remotely operate the mobile body by operating the operating section while watching the display.

Note that remote operation device 31 and remote control server 1 may be provided in the same facility. Note also that remote operation device 31 may be integral with remote control server 1, and that all functions of remote operation device 31 may be included in remote control server 1.

### [1. 3 Remote Control Server]

Next, a configuration of remote control server 1 is described with reference to FIG. 2.

FIG. 2 is a block diagram illustrating an example of the configuration of remote control server 1 according to Embodiment 1.

Remote control server 1 includes information processing device 10, storage 16, remote operation manager 17, remote operation assigner 18, and remote operator 19.

For example, remote control server 1 is a computer that includes a processor and a memory. The memory includes a read only memory (ROM) and a random access memory (RAM), and is capable of storing a program executed by the processor. Each of information processing device 10, remote operation manager 17, remote operation assigner 18, and remote operator 19 is implemented by, for example, a processor that executes a program stored in a memory. The memory that stores the program may be storage 16 or another memory different from storage 16. Furthermore, structural components included in remote control server 1 may be dispersedly located in a plurality of servers.

Information processing device 10 is described in detail later.

### [1. 3. 1 Storage]

Storage 16 includes a hard disk drive (HDD) or a semiconductor memory, for example. In the present embodiment, storage 16 stores vehicle information, travel information, and risk area information, for example.

The vehicle information is an identification number assigned to the mobile body, for example. The identification number assigned to the mobile body may be an IP address of the mobile body.

The travel information is information on travel of a corresponding one of the at least two mobile bodies. For example, the travel information includes information indicating a travel route of the mobile body and information indicating a location of the mobile body, and may also include information indicating a travel speed of the mobile body. The information indicating the travel route indicates a scheduled route (path) to be taken by the mobile body and is, for example, map information indicating a map showing the route taken by the mobile body. The information indicating the location of the mobile body is coordinate information indicating the location of the mobile body, and indicates the current location of the mobile body. The information indicating the travel speed of the mobile body is speed information indicating a speed value for example, and indicates a speed at which the mobile body is allowed to travel or a speed at which the mobile body is actually traveling. For example, the speed at which the mobile body is allowed to travel is the legal speed of the road on which the mobile body is traveling.

The risk area information indicates a risk area having a high stop risk where the mobile body may make a safety stop during autonomous travel. Examples of the risk area include an area in the vicinity of an intersection, a high-traffic area, an area in which the mobile body has made safety stops many times in the past, and a narrow road. The risk area information includes information indicating the location of the risk area. As described above, at least one of remote operation or remote monitoring is required to be performed on the mobile body passing through the risk area. The risk area information may also include at least one of: a time of day at which a risk area occurs; or a condition that defines a risk area. For example, the location of the risk area may be indicated by map information showing the location of the risk area, by latitude-longitude information, or by coordinate information. Examples of the condition defining the risk area include: that at least one of remote operation or remote monitoring is required by a rule, such as a rule of law; that the traffic volume of vehicles or pedestrians is a predetermined volume or higher; that a predetermined vehicle passes through the risk area; and that it is a predetermined date and time; and that a predetermined event is scheduled to be held in the neighborhood.

### [1. 3. 2 Remote Operation Manager]

Remote operation manager 17 manages the number of operators capable of remote operation, for example.

### [1. 3. 3 Remote Operation Assigner]

Remote operation assigner 18 assigns an operator who performs a remote operation to the mobile body that issues a remote operation request. In the present embodiment, remote operation assigner 18 assigns the operator to mobile body 21 that enters the risk area.

### [1. 3. 4 Remote Operator]

Remote operator 19 enables the remote operation performed on the mobile body by connecting the mobile body with the operator (P1, for example) who remotely operates this mobile body. In the present embodiment, remote operator 19 presents information on the mobile body to the operator and performs an operation to verify the request from the mobile body. For example, remote operator 19 receives an operation performed by the operator on mobile body 21 that is targeted for the remote operation and, based on this operation, operates mobile body 21 to cause mobile body 21 to enter the risk area.

### [1. 3. 5 Information Processing Device]

Information processing device 10 outputs information for controlling each of the plurality of mobile bodies. In the present embodiment, information processing device 10 controls mobile body 21 that is the first mobile body, in the risk area. Furthermore, information processing device 10 causes mobile body 22 that is the second mobile body to perform the following control to follow mobile body 21 in the risk area or causes mobile body 22 to continue performing the individual control to travel independently of mobile body 21.

In the present embodiment, information processing device 10 includes obtainer 11, predictor 12, identifier 13, switching determiner 14, and outputter 15 as illustrated in FIG. 2 for example.

### [1. 3. 5. 1 Obtainer]

Obtainer 11 obtains travel information on travel of the at least two mobile bodies and location information on the first area that is the risk area. In the present embodiment, obtainer 11 obtains the travel information on each of the at least two mobile bodies by obtaining the vehicle information and the travel information from storage 16. Furthermore, obtainer 11 obtains the location information on the risk area by obtaining the risk area information from storage 16.

Note that obtainer 11 is also able to obtain a remote operation request from each of the at least two mobile bodies.

### [1. 3. 5. 2 Predictor]

Based on the travel information and the location information on the first area, i.e., the risk area, that are obtained by obtainer 11, predictor 12 predicts, from among the at least two mobile bodies, mobile body 21 which is the first mobile body that has a travel route scheduled to pass through the first area and that enters the first area.

In the present embodiment, predictor 12 predicts the location of each of the at least two mobile bodies at regular time intervals, based on the risk area information, the vehicle information, and the travel information. To be more specific, predictor 12 determines the location and the travel route of each of the at least two mobile bodies from the vehicle information and the travel information, and determines the location of the risk area (the first area) from the risk area information. Predictor 12 predicts, from among the at least two mobile bodies, mobile body 21 that has the travel route scheduled to pass through this risk area and that is scheduled to reach this risk area earlier and enter this risk area.

### [1. 3. 5. 3 Identifier]

Based on the travel information and the location information on the first area, i.e., the risk area, that are obtained by obtainer 11, identifier 13 identifies, from among the at least two mobile bodies, mobile body 22 which is the second mobile body that is different from the first mobile body and that has the travel route scheduled to pass through the first area.

In the present embodiment, identifier 13 identifies the location and the travel route of each of the at least two mobile bodies from the vehicle information and the travel information, and identifies the location of the risk area from the risk area information. Furthermore, identifier 13 identifies, from among the at least two mobile bodies, mobile body 22 that has the travel route scheduled to pass through this risk area and that is scheduled to reach and enter this risk area after mobile body 21.

### [1. 3. 5. 4 Switching Determiner]

Switching determiner 14 determines whether, before mobile body 21 that is the first mobile body enters the first area that is the risk area, mobile body 22 that is the second mobile body will catch up with mobile body 21. In the present embodiment, switching determiner 14 determines whether mobile body 22 will catch up with mobile body 21, based on a waiting time period of mobile body 21 and a catching-up time period of mobile body 22. Note that switching determiner 14 may determine whether mobile body 22 will catch up with mobile body 21 by determining whether a distance between mobile body 21 and mobile body 22 on the travel route is less than or equal to a reference value, such as 30 meters.

FIG. 3 is a diagram illustrating the waiting time period and the catching-up time period according to Embodiment 1.

Waiting time period w of mobile body 21 is time measured from when mobile body 21 reaches risk area 50 (the first area) to when mobile body 21 enters risk area 50. In the example illustrated in FIG. 3, waiting time period w [sec] of mobile body 21 is a period of time during which mobile body 21 closest to risk area 50 waits before entering risk area 50, or more specifically, waits at a location immediately before (hereafter, described as "waits in front of") risk area 50 on the travel route. For example, waiting time period w [sec] of mobile body 21 may be an average amount of time to wait for assignment of an operator capable of remote operation.

Catching-up time period t of mobile body 22 is time measured from a first time at which mobile body 21 reaches risk area 50 (the first area) to a second time at which mobile body 22 reaches the location of mobile body 21. In the example illustrated in FIG. 3, catching-up time period t [sec] of mobile body 22 is time measured from when mobile body 21 reaches a location immediately before (reaches in front of) risk area 50 to when mobile body 22 reaches this location of mobile body 21 by taking the travel route.

Note that catching-up time period t [sec] corresponds to a period of time taken by mobile body 22 to travel from the location of mobile body 22 at the first time to the location of mobile body 21. Catching-up time period t [sec] is not limited to a period of time taken by mobile body 22 to travel along the travel route from the location of mobile body 22 at the first time to the location of mobile body 21 without changing a current speed. Catching-up time period t [sec] may be a period of time taken by mobile body 22 to travel along the travel route from the location of mobile body 22 at the first time to the location of mobile body 21 at a speed faster than the current speed.

To be more specific, catching-up time period t [sec] may be a period of travel time taken by mobile body 22 to autonomously travel at an accelerated speed from the location of mobile body 22 at the first time at which mobile body 21 reaches risk area 50 to the location of mobile body 21. For example, mobile body 22 may travel at substantially 80 percent of the maximum speed in normal times. Then, when accelerating, mobile body 22 may travel to the location of mobile body 21 at a speed as close as possible to the maximum speed.

In the present embodiment, switching determiner 14 compares waiting time period w of mobile body 21 with catching-up time period t of mobile body 22. Then, when t ≤ w, switching determiner 14 determines that the control mode of mobile body 22 is switchable to the following control mode in which mobile body 22 autonomously travel by following mobile body 21.

Here, the individual control and the following control performed by mobile body 22 are described with reference to FIG. 4A and FIG. 4B.

FIG. 4A is a diagram illustrating the individual control according to Embodiment 1. FIG. 4B is a diagram illustrating the following control according to Embodiment 1.

As illustrated in FIG. 4A, the individual control of mobile body 22 is performed in the autonomous mode in which autonomous travel is allowed, and refers to the control mode in which mobile body 22 autonomously travels independently of mobile body 21. By obtaining instruction information for selecting the individual control mode, mobile body 22 maintains the individual control mode or switches to the individual control mode.

Note that the individual control of mobile body 22 is not limited to the control that allows mobile body 22 to autonomously travel. The individual control of mobile body 22 may be performed to allow mobile body 22 to travel independently of mobile body 21, through a remote operation performed on mobile body 22 independently of a remote operation performed on mobile body 21.

As illustrated in FIG. 4B, the following control of mobile body 22 is performed in the autonomous mode in which autonomous travel is allowed, and refers to the control mode in which mobile body 22 autonomously travels by following mobile body 21. By obtaining information on mobile body 21 targeted to be followed and instruction information for selecting the following control mode, mobile body 22 switches from the individual control mode to the following control mode.

Note that the following control of mobile body 22 is not limited to the control that allows mobile body 22 to autonomously travel. The control may be performed to allow mobile body 22 to travel by following mobile body 21, through a remote operation performed on mobile body 22 corresponding to a remote operation performed on mobile body 21. For example, remote operator 19 may perform a remote operation on mobile body 21 and then perform this remote operation performed on mobile body 21 also on mobile body 22 in a shifted location or at a shifted time.

With this, mobile body 22 travels similarly to mobile body 21 in the shifted location or at the shifted time. Thus, as with the case where mobile body 22 autonomously travels by following mobile body 21, the control described above enables mobile body 22 to travel by following mobile body 21.

As described above, switching determiner 14 compares the waiting time period of mobile body 21 in front of the risk area with the catching-up time period of mobile body 22 that follows, and compares the distance between mobile body 21 and mobile body 22 with the reference value. With this, switching determiner 14 is able to determine whether mobile body 22 will catch up with mobile body 21 before mobile body 21 enters the risk area.

### [1. 3. 5. 5 Outputter]

When switching determiner 14 determines that mobile body 22 will catch up with mobile body 21 before mobile body 21 enters the risk area (the first area), outputter 15 outputs, to mobile body 22, instruction information for causing mobile body 22 to perform the following control to travel by following mobile body 21. In contrast, when switching determiner 14 determines that mobile body 22 will not catch up with mobile body 21 before mobile body 21 enters the risk area (the first area), outputter 15 outputs, to mobile body 22, instruction information for causing mobile body 22 to continue performing the individual control to travel independently of mobile body 21.

In the present embodiment, when switching determiner 14 determines that the catching-up time period of mobile body 22 is less than or equal to the waiting time period of mobile body 21, outputter 15 outputs the instruction information for causing mobile body 22 to switch to the following control mode in which mobile body 22 follows mobile body 21. In contrast, when switching determiner 14 determines that the catching-up time period of mobile body 22 is more than the waiting time period of mobile body 21, outputter 15 outputs the instruction information for causing mobile body 22 to maintain the individual control mode.

In this way, outputter 15 generates and outputs, to mobile body 22, the instruction information for causing mobile body 22 to maintain the individual control mode or to switch to the following control mode.

Note that when outputting, to mobile body 22, the instruction information for causing mobile body 22 to perform the following control, outputter 15 may also output, to mobile body 21 that is a leading body, instruction information indicating that mobile body 21 is the leading body and followed by mobile body 22 that follows (runs behind) mobile body 21. In this case, mobile body 21 that is the leading body is switchable to the following control mode in which mobile body 21 itself is the leading body.

Furthermore, outputter 15 determines drive information for the mobile body and outputs the determined drive information. Here, based on the vehicle information, the travel information, and the risk area information stored in storage 16 and the number of operators capable of remote operation and managed by remote operation manager 17, outputter 15 determines the drive information for allowing only mobile bodies, the total number of which is less than the aforementioned number of operators, to enter the risk area. Here, the drive information includes a speed at which the mobile body travels on the travel route. For example, the drive information on mobile body 21 and mobile body 22 includes, in addition to the speeds at which mobile body 21 and mobile body 22 travel on the travel route, information indicating a stop (at zero speed) at a location in front of the risk area.

Furthermore, outputter 15 may also output instruction information for causing mobile body 22 to accelerate to catch up with mobile body 21. Outputter 15 may output, as the instruction information, the drive information indicating a speed to which mobile body 22 is accelerated. Moreover, outputter 15 may transmit, to mobile body 21 and mobile body 22, a control instruction for remote operation according to an instruction from remote operation device 31. Outputter 15 may transmit, as the instruction information, the control instruction for the remote operation in the individual control mode and the control instruction for the remote operation in the following control mode.

### [1. 4 Operation of Information Processing Device]

An information processing method executed by information processing device 10 having the configuration described above, or more specifically, an operation performed by information processing device 10 is described below.

FIG. 5 is a flowchart illustrating the operation performed by information processing device 10 according to Embodiment 1.

As illustrated in FIG. 5, information processing device 10 first obtains the travel information on the at least two mobile bodies (S11). To be more specific, information processing device 10 obtains the travel information on the travel of the at least two mobile bodies each of which is capable of autonomous travel and operable by at least one of remote operation or remote monitoring.

Next, information processing device 10 predicts the first mobile body, based on the travel information obtained in Step S11 and the location information on the risk area in which at least one of remote operation or remote monitoring is required (S12). To be more specific, based on the travel information obtained in Step S11 and the location information on the risk area, information processing device 10 predicts, from among the at least two mobile bodies, mobile body 21 that has the travel route scheduled to pass through the risk area and that enters the first area.

Next, information processing device 10 identifies the second mobile body, based on the travel information obtained in Step S11 and the location information on the risk area (S13). To be more specific, based on the travel information obtained in Step S11 and the location information on the risk area, information processing device 10 identifies mobile body 22 that is different from mobile body 21 and that has the travel route scheduled to pass through the risk area.

Next, information processing device 10 determines whether, before the first mobile body predicted in Step S12 enters the risk area, the second mobile body identified in Step S13 will catch up with the first mobile body (S14). In the present embodiment, information processing device 10 determines whether mobile body 22 will catch up with mobile body 21, based on the waiting time period of mobile body 21 predicted in Step S12 and the catching-up time period of mobile body 22 identified in Step S13. Here, the waiting time period of mobile body 21 refers to time measured from when mobile body 21 reaches the risk area to when mobile body 21 enters the risk area. The catching-up time period of mobile body 22 is time measured from the first time at which mobile body 21 reaches the risk area to the second time at which mobile body 22 reaches the location of mobile body 21.

When determining in Step S14, that the second mobile body identified in Step S13 will catch up with the first mobile body (Yes in S14), information processing device 10 outputs, to the second mobile body, the instruction information for causing the second mobile body to perform the following control (S15). In the present embodiment, when determining that the catching-up time period of mobile body 22 is less than or equal to the waiting time period of mobile body 21, information processing device 10 outputs the instruction information for switching mobile body 22 to the following control mode in which mobile body 22 follows mobile body 21.

In contrast, when determining in Step S14 that the second mobile body identified in Step S13 will not catch up with the first mobile body (No in S14), information processing device 10 may end the operation. In the present embodiment, when the catching-up time period of mobile body 22 is more than the waiting time period of mobile body 21, information processing device 10 outputs the instruction information for causing mobile body 22 to maintain the individual control mode.

Next, the example of the operation (the operation example) of information processing device 10 according to Embodiment 1 described with reference to FIG. 5 is described based on specific information.

FIG. 6 is a flowchart illustrating the operation example of information processing device 10 according to Embodiment 1.

As illustrated in FIG. 6, information processing device 10 first verifies whether a fixed period of time has elapsed (S101).

When determining in Step S101 that the fixed period of time has elapsed (Yes in S101), information processing device 10 obtains the travel information of each of the at least two mobile bodies (S102). For example, obtainer 11 obtains the travel information of each of the at least two mobile bodies by obtaining the vehicle information and the travel information from storage 16. When it is determined in Step S101 that the fixed period of time has not elapsed (No in S101), the process of Step S101 is repeated.

Next, information processing device 10 obtains the risk area information (S103). For example, obtainer 11 obtains the location information on the risk area by obtaining the risk area information from storage 16.

Next, information processing device 10 identifies mobile bodies that are scheduled to pass through the same risk area, based on the location information on the risk area obtained in Step S103 (S104). For example, predictor 12 identifies the location and the travel route of each of the at least two mobile bodies from the vehicle information and the travel information obtained from storage 16, and identifies the location of the risk area from the risk area information. Furthermore, predictor 12 predicts, from among the at least two mobile bodies, mobile body 21 that has the travel route scheduled to pass through this risk area and that is scheduled to reach and enter this risk area earlier. Identifier 13 identifies, from among the at least two mobile bodies, mobile body 22 that has the travel route scheduled to pass through this risk area and that is scheduled to reach and enter this risk area after mobile body 21. In this way, information processing device 10 is able to identify mobile body 21 and mobile body 22 that are scheduled to pass through the same risk area. Note that the number of mobile bodies 21 and the number of mobile bodies 22 are not limited to one and may be two or more.

Next, information processing device 10 determines whether the distance on the travel route between mobile body 21 and mobile body 22 identified in Step S104 is less than or equal to the reference value (S105). For example, switching determiner 14 determines whether the distance between mobile body 21 and mobile body 22 on the travel route is less than or equal to the reference value, such as 30 meters. With this, switching determiner 14 is able to determine whether mobile body 22 will catch up with mobile body 21 before mobile body 21 enters the risk area. Note that whether mobile body 22 will catch up with mobile body 21 need not be identified based on the distance, and may be identified by comparing the waiting time period of mobile body 21 with the catching-up time period of mobile body 22 as described above.

When it is determined in Step S105 that the distance on the travel route between mobile body 21 and mobile body 22 identified in Step S104 is less than or equal to the reference value (Yes in S105), information processing device 10 decides to switch the control mode of mobile body 22 to the following control mode (S106). For example, when the distance between mobile body 21 and mobile body 22 on the travel route is less than or equal to the reference value, outputter 15 decides to switch the control mode of mobile body 22 to the following control mode in which mobile body 22 follows mobile body 21.

When it is determined in Step S105 that the distance on the travel route between mobile body 21 and mobile body 22 identified in Step S104 exceeds the reference value (No in S105), information processing device 10 returns to Step S104 and identifies mobile body 21 and mobile body 22 again. In this case, the control mode of mobile body 22 before identified again is maintained in the individual control mode.

Hereafter, the processing from Step S101 to Step S106 described above is referred to as the basic determination.

Next, information processing device 10 issues the instruction to mobile body 22, based on the result of the determination made in Step S105 (S107). To be more specific, outputter 15 generates and outputs, to mobile body 22, the instruction information for switching the control mode of mobile body 22 to the following control mode in which mobile body 22 follows mobile body 21.

Note that the waiting time period from when mobile body 21 reaches the risk area to when mobile body 21 enters the risk area may be a fixed or variable period of time. For example, the waiting time period may be extendable.

Furthermore, a plurality of mobile bodies 22 may follow one mobile body 21 by the control over this one mobile body 21 and the plurality of mobile bodies 22. Operating efficiency increases as the number of mobile bodies 22 caused to travel together by one remote operation increases. Thus, when waiting for more mobile bodies 22 is allowed, information processing device 10 may extend the waiting time period. With this, information processing device 10 may also increase the number of mobile bodies 22 that travel by following mobile body 21.

However, stopping of mobile body 21 can possibly interfere with the travel of another mobile body. For example, when another mobile body, such as a manually-operated vehicle, is running behind mobile body 21, the stopping of mobile body 21 can possibly interfere with the running of this other mobile body. When the stopping of mobile body 21 interferes with the running of another mobile body in this way, information processing device 10 need not extend the waiting time period.

Furthermore, information processing device 10 predicts, as the waiting time period, time from when mobile body 21 reaches the risk area to when mobile body 21 enters the risk area, for example. However, assignment of an operator capable of remote operation takes time in some cases while it does not in other cases. On this account, the actual waiting time period from when mobile body 21 reaches the risk area to when mobile body 21 enters the risk area may be longer than the predicted time in some cases and shorter than the predicted time in other cases.

For example, when the waiting time period is shorter than the predicted time, it is difficult for mobile body 22 that is scheduled to reach the location of mobile body 21 to reach the location of mobile body 21 during the waiting time period. In this case, the following control may be canceled. Particularly when the stopping of mobile body 21 interferes with the running of another mobile body, such as a manually-operated vehicle, the following control may be canceled. More specifically, when another mobile body, such as a manually-operated vehicle, is running behind mobile body 21, the stopping of mobile body 21 can possibly interfere with the running of this other mobile body. For this reason, the following control may be canceled.

Alternatively, even when the operator capable of remote operation is assigned before the end of the predicted time and mobile body 21 is ready to enter the risk area, the waiting time period may be maintained as predicted. Particularly when the stopping of mobile body 21 does not interfere with the running of another mobile body, the waiting time period may be maintained as it is. To be more specific, when another mobile body, such as a manually-operated vehicle, is not running behind mobile body 21, the stopping of mobile body 21 does not interfere with the running of another mobile body. For this reason, the waiting time period may be maintained as it is.

When the waiting time period is longer than the predicted time, information processing device 10 may also cause another mobile body, capable of reaching the location of mobile body 21 during the longer waiting time period and following mobile body 21, to follow mobile body 21.

The above-mentioned changing of the waiting time period may be executed by switching determiner 14 of information processing device 10. The addition of a mobile body caused to perform the following control may be made by repeating the processing illustrated in FIG. 5 or FIG. 6 or by identifying an additional mobile body in the mobile-body identifying. Furthermore, the following control may be canceled by switching determiner 14 of information processing device 10 via outputter 15 of information processing device 10. To be more specific, the instruction information for canceling the instruction information for the following control may be outputted.

Furthermore, when deciding to cause mobile body 22 to perform the following control to follow mobile body 21, information processing device 10 may assign an operator to mobile body 21 and provide advanced notification of the following control to this operator. The remote operation for the following control uses more screens and requires a more cautious operation as compared with the remote operation for the individual control, for example. The advanced notification of the following control to the operator allows the operator to physically or psychologically prepare for such a remote operation, for example.

For example, when deciding to cause mobile body 22 to perform the following control to follow mobile body 21, information processing device 10 determines an operator to be assigned to mobile body 21 from among a plurality of operators, based on skills of each operator. Here, the following control requires skills higher than skills required for the individual control.

On this account, information processing device 10 may perform control to keep the operator already assigned to mobile body 21 from being assigned to a different mobile body before the start of the remote operation for the following control. For example, in response to a request for a remote operation from a different mobile body, information processing device 10 may assign, to this different mobile body, an operator different from the operator already assigned to mobile body 21.

The above-described notification of the following control and the above-described assignment control may be performed by remote operation assigner 18.

### [1. 5 Advantageous Effects etc.]

Remote control system 100 according to the present embodiment reduces simultaneous entries of a plurality of mobile bodies into the risk area with a high risk of safety stop, through management of a plurality of mobile bodies by limiting the number of mobile bodies allowed to enter the risk area to the number less than the number of operators capable of remote operation. This reduces the risk that the remote operations on a plurality of mobile bodies are required at the same time, thereby enabling the operator to reliably perform the remote operation or remote monitoring on the mobile body in the risk area.

However, the limitation on the simultaneous entries into the risk area causes the mobile body to wait in front of the risk area, to decelerate to delay the time of arrival at the risk area, or to change the travel route to avoid the risk area. This reduces the utilization rate of the mobile body. Furthermore, the mobile body waiting in front of the risk area can possibly block the passage of pedestrians, for example.

In response to this, remote control system 100 obtains the travel information on the travel of the at least two mobile bodies. Then, based on the travel information and the location information on the risk area, remote control system 100 predicts, from among the at least two mobile bodies, mobile body 21 that has the travel route scheduled to pass through the risk area and that enters the risk area. Moreover, based on the travel information and the location information, remote control system 100 identifies mobile body 22 that is different from mobile body 21 and that has the travel route scheduled to pass through the risk area.

Furthermore, remote control system 100 determines whether mobile body 22 will catch up with mobile body 21 before mobile body 21 enters the risk area. When it is determined that mobile body 22 will catch up with mobile body 21 before mobile body 21 enters the risk area, the instruction information for causing mobile body 22 to perform the following control to follow mobile body 21 is outputted to mobile body 22.

In this way, when it is determined that mobile body 22 will catch up with mobile body 21, the following control is performed on mobile body 22. This allows remote control system 100 to narrow down the mobile body targeted for remote operation or remote monitoring in the risk area (the first area) to mobile body 21 that is remotely operable by the operator. Thus, the remote operation can be reliably performed on mobile body 21 in the risk area.

Furthermore, by remotely operating only mobile body 21, the operator is able to cause mobile body 22 performing the following control to travel together with mobile body 21. Thus, remote control system 100 does not need to keep mobile body 22 waiting instead of entering the risk area, until mobile body 21 passes through the risk area. This increases the utilization rate of mobile body 22. More specifically, allowing the plurality of mobile bodies (mobile body 21 and mobile body 22) to enter the risk area reduces the stop duration of mobile body 22, for instance, and thus increases the utilization rate.

Note that when mobile body 22 will not catch up with mobile body 21, the individual control instead of the following control is performed on mobile body 22. Also in this case, because mobile body 22 does not reach the risk area before mobile body 21 enters the risk area, remote control system 100 can narrow down the mobile body targeted for remote operation or remote monitoring in the risk area to mobile body 21 that is remotely operable by the operator. This enables the operator to reliably perform the remote operation or remote monitoring on mobile body 21 in the risk area.

Here, remote control system 100 may determine whether mobile body 22 will catch up with mobile body 21 by comparing the waiting time period of mobile body 21 in front of the risk area with the catching-up time period taken by mobile body 22 to catch up with mobile body 21 in front of the risk area. The comparison between the waiting time period and the catching-up time period enables an easy determination whether mobile body 22 can be caused to perform the following control to follow mobile body 21.

Furthermore, the catching-up time period may be calculated from a period of time taken when mobile body 22 accelerates to reach the location of mobile body 21 in front of the risk area.

With this, remote control system 100 can apply the following control to more mobile bodies 22. This further reduces the number of mobile bodies 22 kept waiting instead of entering the risk area until mobile body 21 passes through the risk area. Thus, the utilization rate of mobile body 22 can be increased. More specifically, allowing the plurality of mobile bodies (mobile body 21 and mobile body 22) to enter the risk area in more cases reduces the stop duration of mobile body 22, for instance, and thus increases the utilization rate.

Furthermore, when mobile body 22 will not catch up with mobile body 21, each of mobile body 21 and mobile body 22 may stay under the individual control and enter the risk area by autonomously traveling, on condition that the number of mobile bodies, including mobile body 21 and mobile body 22, that are traveling in the risk area is kept less than or equal to the number of operators. Alternatively, in this case, each of mobile body 21 and mobile body 22 may enter the risk area through the remote operation performed by the operator.

### [Embodiment 2]

To remotely operate mobile body 21, the operator needs to check the situation surrounding mobile body 21 more extensively when remotely operating mobile body 21 followed by mobile body 22 than when remotely operating only mobile body 21. On this account, depending on the surrounding situation, it may be difficult for the operator to remotely operate mobile body 21 followed by mobile body 22. In terms of safety in this case, the individual control mode of mobile body 22 may be maintained instead of being switched to the following control.

More specifically, although whether to cause mobile body 22 to perform the following control is determined by making the basic determination whether mobile body 22 will catch up with mobile body 21 before mobile body 21 waiting in front of the risk area enters the risk area in the above embodiment, this is not intended to be limiting. Even when mobile body 22 catches up with mobile body 21 and is capable of the following control, mobile body 22 need not perform the following control when the travel of mobile body 21 and mobile body 22 together in the risk area increases the risk of, for example, safety stop. Embodiment 2 describes this case. Note that the following mainly describes differences from Embodiment 1.

Switching determiner 14 according to Embodiment 2 performs the basic determination whether mobile body 22 will catch up with mobile body 21 before mobile body 21 enters the risk area. After this, switching determiner 14 determines, or more specifically, makes switching redetermination whether mobile body 22 is switchable to the following control. To be more specific, when determining (making the basic determination) that mobile body 22 will catch up with mobile body 21 before mobile body 21 enters the risk area (the first area), switching determiner 14 also calculates, based on the situation of the risk area, a risk caused by the following control performed by mobile body 22 in the risk area. Then, switching determiner 14 determines (makes the switching redetermination) whether the calculated risk exceeds a predetermined reference value. Note that, by reference to the situation of the risk area indicated by the risk area information stored in storage 16, switching determiner 14 may calculate the risk based on a condition, such as the traffic volume in the risk area, a situation of vehicles parked on the road, or whether it is nighttime. Examples of the situation of vehicles parked on the road include the number of vehicles parked on the road in the risk area and the size of a parked vehicle (whether the parked vehicle is a large truck). The situation of the risk area can be obtained from information obtained by another mobile body that precedes or from an infrastructure camera, such as a camera included in a roadside device other than a mobile body.

Note that the risk caused by the following control performed by mobile body 22 in the risk area may indicate a difficulty level of performing a remote operation on mobile body 21 while causing mobile body 22 to perform the following control in the risk area. In this case, the risk area information further includes remote-operation risk information indicating an area situation of the corresponding risk area. The remote-operation risk information is updated periodically. For example, the remote-operation risk information may be updated whenever each of the at least two mobile bodies obtains related information. Alternatively, the related information may be updated based on information obtainable from an infrastructure camera, such as a camera included in a roadside device other than a mobile body.

FIG. 7 is a diagram illustrating an example of the remote-operation risk information according to Embodiment 2. Risk area ID is an identifier that uniquely identifies the risk area. Traffic volume (vehicles), traffic volume (pedestrians), road situation, and luminance are related information on the inside of a corresponding risk area. The traffic volume (vehicles) refers to the traffic volume of vehicles passing through the corresponding risk area, and is indicated by the number of vehicles per minute. The traffic volume (pedestrians) refers to the traffic volume of pedestrians passing through the corresponding risk area, and is indicated by the number of pedestrians per minute. The road information indicates the number and sizes of vehicles parked on the road in the corresponding risk area. The luminance indicates surrounding luminance in the corresponding risk area and is measured in lux.

In the example illustrated in FIG. 7, when determining, by reference to the remote-operation risk information, that the traffic volume (pedestrians) exceeds a predetermined reference value, such as one pedestrian per minute, switching determiner 14 determines that the remote operation on mobile body 21 followed by mobile body 22 performing the following control is difficult. Furthermore, in the example illustrated in FIG. 7, when determining, by reference to the remote-operation risk information, that the traffic volume (vehicles) exceeds a predetermined reference value, such as one vehicle per minute, switching determiner 14 determines that the remote operation on mobile body 21 followed by mobile body 22 performing the following control is difficult. Furthermore, in the example illustrated in FIG. 7, when determining, by reference to the remote-operation risk information, that the number of parked vehicles included as the road situation exceeds a predetermined reference value, such as two vehicles, switching determiner 14 determines that the remote operation on mobile body 21 followed by mobile body 22 performing the following control is difficult. When determining, by reference to the remote-operation risk information, that just one large vehicle is parked on the road, switching determiner 14 may determine that this information included as the road situation exceeds a predetermined reference value regardless of the number of parked vehicles. Thus, in this case, switching determiner 14 may determine that the remote operation on mobile body 21 followed by mobile body 22 performing the following control is difficult. Furthermore, when determining, by reference to the remote-operation risk information, that the luminance is less than 100 lux, switching determiner 14 may determine that the remote operation on mobile body 21 followed by mobile body 22 performing the following control is difficult.

Note that cooperation between the operator and the infrastructure camera can complement the field of view of mobile body 21 that is targeted for the remote operation. This can reduce the aforementioned predetermined reference values, thereby enabling switching determiner 14 to perform the switching redetermination based on the reduced predetermined reference values.

When it is determined that the risk exceeds the predetermined reference value, outputter 15 outputs, to mobile body 22, the instruction information for causing mobile body 22 to continue performing the individual control to travel independently of mobile body 21, instead of outputting the instruction information for causing mobile body 22 to perform the following control.

In contrast, when it is determined that the risk is less than or equal to the predetermined reference value, outputter 15 outputs, to mobile body 22, the instruction information for causing mobile body 22 to perform the following control.

In this way, based on the result of the switching redetermination made by switching determiner 14, outputter 15 generates and outputs, to mobile body 22, the instruction information for causing mobile body 22 to maintain the individual control mode or switch to the following control mode.

The switching redetermination operation executed by information processing device 10 having the configuration described above according to Embodiment 2 is described below.

FIG. 8 is a flowchart illustrating an example of the operation performed by information processing device 10 according to Embodiment 2.

As illustrated in FIG. 8, information processing device 10 first makes the basic determination (S100). Step S100 has been described in detail with reference to FIG. 6, and thus the description thereof is omitted here.

When it is determined in Step S100 that, as a result of the basic determination, the control mode of mobile body 22 is switched to the following control mode ("Switch to following control" in S100), information processing device 10 calculates a difficulty level of performing the remote operation (S201). For example, by reference to the remote-operation risk information included in the risk area information stored in storage 16, switching determiner 14 calculates the difficulty level of performing the remote operation on mobile body 21 while causing mobile body 22 to perform the following control in the risk area. Note that when it is determined in Step S100 that, as a result of the basic determination, the control mode of mobile body 22 is not switched to the following control mode ("Not switch to following control" in S100), the operation returns to Step S100.

Next, information processing device 10 makes the switching redetermination (S202). For example, switching determiner 14 makes the switching redetermination by determining whether the difficulty level calculated in Step S201 exceeds a predetermined reference value.

When it is determined in Step S202 that, as a result of the switching redetermination, the control mode of mobile body 22 is switched to the following control mode ("Switch to following control" in S202), information processing device 10 issues the instruction to mobile body 22 based on the result of the determination made in Step S202 (S203). To be more specific, when the difficulty level is determined to be less than or equal to the predetermined reference value in Step S202, outputter 15 generates and outputs, to mobile body 22, the instruction information for switching the control mode of mobile body 22 to the following control mode in which mobile body 22 follows mobile body 21.

When it is determined in Step S202 that, as a result of the switching redetermination, the control mode of mobile body 22 is not switched to the following control mode ("Not switch to following control" in S202), information processing device 10 returns to Step S100 instead of outputting, to mobile body 22, the instruction information for causing mobile body 22 to perform the following control. For example, when the control mode of mobile body 22 is not switched to the following control, outputter 15 outputs, to mobile body 22, the instruction information for causing mobile body 22 to continue performing the individual control to travel independently of mobile body 21 instead of outputting the instruction information for causing mobile body 22 to perform the following control. Then, the operation returns to Step S100.

As described above, remote control system 100 according to Embodiment 2 makes the basic determination whether, before mobile body 21 enters the risk area, the control mode is maintained in the individual control mode or switched to the following control mode. After this, the risk caused when the control mode is switched to the following control is calculated based on the situation of the risk area. Then, the switching redetermination whether to actually switch the control mode to the following control mode is made.

With this, remote control system 100 is able to cause mobile body 22 not to perform the following control when the travel of mobile body 21 and mobile body 22 together in the risk area increases the risk of, for example, safety stop. Thus, the mobile body targeted for remote operation in the risk area can be narrowed down only to mobile body 21 that is remotely operable with safety and reliability. More specifically, whether or not to switch the control mode to the following control can be determined based on the risk. Hence, the safe remote control can be achieved while preventing a decrease in the utilization rates of the plurality of mobile bodies.

Remote control system 100 according to Embodiment 2 makes the switching redetermination by calculating, based on the situation of the risk area, the risk caused when the control mode is switched to the following control, or more specifically, by calculating the difficulty level of performing the remote operation on mobile body 21 followed by mobile body 22 performing the following control. However, the switching redetermination is not limited to this. Variations of the switching redetermination are described as follows.

### [Variation 1]

The switching redetermination may be made based on a past history, for example. Note that the following mainly describes differences from Embodiment 2.

After determining (making the basic determination) that mobile body 22 will catch up with mobile body 21 before mobile body 21 enters the risk area, switching determiner 14 according to Variation 1 determines (makes the switching redetermination) whether the control mode of mobile body 22 is actually switchable to the following control mode. To be more specific, when determining (making the basic determination) that mobile body 22 will catch up with mobile body 21 before mobile body 21 enters the risk area (the first area), switching determiner 14 further makes the switching redetermination. Switching determiner 14 determines, in the switching redetermination, whether a total number of times that is included in a past history of a mobile body which previously passed through the risk area and that indicates a total number of stops having been made by the mobile body autonomously traveling in the risk area exceeds a threshold value. In this case, the risk area information includes the past history of the mobile body that previously passed through the risk area. The past history is a safety-related history and updated periodically.

FIG. 9 is a diagram illustrating an example of the past history according to Variation 1 of Embodiment 2. Risk area ID is an identifier that uniquely identifies the risk area. Number of safety stops refers to the number of times the mobile body has made a stop to ensure the safety during autonomous travel in a corresponding risk area. Number of remote stops refers to the number of times the mobile body remotely operated made a stop to ensure the safety during travel in the corresponding risk area.

In the example illustrated in FIG. 9, switching determiner 14 determines, by reference to the past history, whether the number of unsafe events, such as safety stops, in the risk area that mobile body 21 targeted for the remote operation is about to enter exceeds a predetermined threshold value. When determining, by reference to the past history, that the number exceeds the predetermined threshold value, such as 1, switching determiner 14 determines that the remote operation on mobile body 21 followed by mobile body 22 performing the following control is difficult.

When it is determined that the number of times the mobile body has made a stop during autonomous travel in the risk area exceeds the threshold value, outputter 15 outputs, to mobile body 22, the instruction information for causing mobile body 22 to continue performing the individual control to travel independently of mobile body 21, instead of outputting the instruction information for causing mobile body 22 to perform the following control.

In contrast, when it is determined that the number of times the mobile body has made a stop during autonomous travel in the risk area is less than or equal to the threshold value, outputter 15 outputs, to mobile body 22, the instruction information for causing mobile body 22 to perform the following control.

In this way, based on the result of the switching redetermination made by switching determiner 14, outputter 15 generates and outputs, to mobile body 22, the instruction information for causing mobile body 22 to perform the individual control or the following control.

According to the present variation described above, when the past history indicates that the mobile body has made stops a certain number of times while traveling in the risk area, the difficulty level for mobile body 21 and mobile body 22 to travel together in the risk area is assumed to be high. On this account, when the past history indicates that the mobile body has made stops a certain number of times while traveling in the risk area, the control mode of mobile body 22 is not switched to the following control mode. Thus, the mobile body targeted for remote operation in the risk area can be narrowed down only to mobile body 21 that is remotely operable with reliability.

### [Variation 2]

The switching redetermination may be made based on the size of a risk area, for example.

After making the basic determination that mobile body 22 will catch up with mobile body 21 before mobile body 21 enters the risk area, switching determiner 14 according to Variation 2 makes the switching redetermination whether mobile body 22 is switchable to the following control. To be more specific, when determining (making the basic determination) that mobile body 22 will catch up with mobile body 21 before mobile body 21 enters the risk area, switching determiner 14 further determines (makes the switching redetermination) whether the length of a scheduled passage route that is a route scheduled to be taken by mobile body 21 to pass through the risk area exceeds a predetermined value. In this case, the risk area information includes the size of the risk area. Based on the risk area information, the vehicle information, and the travel information, switching determiner 14 is able to calculate the length of a distance traveled by mobile body 21 within the risk area, or more specifically, the length of the scheduled passage route taken by mobile body 21. When the length of the scheduled passage route exceeds the predetermined value, such as 50 meters, it is determined that in the event that a remote operation needs to be performed on mobile body 21 followed by mobile body 22, a workload on the operator who performs the remote operation is high. Thus, in this case, the control mode of mobile body 22 is not switched to the following control mode.

When it is determined that the length of the scheduled passage route of mobile body 21 exceeds the predetermined value, outputter 15 outputs, to mobile body 22, the instruction information for causing mobile body 22 to continue performing the individual control to travel independently of mobile body 21, instead of outputting the instruction information for causing mobile body 22 to perform the following control.

In contrast, it is determined that the length of the scheduled passage route of mobile body 21 is less than or equal to the predetermined value, outputter 15 outputs, to mobile body 22, the instruction information for causing mobile body 22 to perform the following control.

In this way, based on the result of the switching redetermination made by switching determiner 14, outputter 15 generates and outputs, to mobile body 22, the instruction information for causing mobile body 22 to maintain the individual control mode or switch to the following control mode.

According to the present variation described above, when the route taken by mobile body 21 to pass through the risk area has a certain length or more, the operation difficulty level for the operator to perform the remote operation for causing mobile body 21 and mobile body 22 to travel together in the risk area is assumed to be high. On this account, when the route taken by mobile body 21 to pass through the risk area has a certain length or more, the control mode of mobile body 22 is not switched to the following control mode. Thus, the mobile body targeted for remote operation in the risk area can be narrowed down only to mobile body 21 that is remotely operable with reliability.

### [Variation 3]

The switching redetermination may be made based on characteristics of a scheduled passage route taken to pass through a risk area, for example.

After making the basic determination that mobile body 22 will catch up with mobile body 21 before mobile body 21 enters the risk area, switching determiner 14 according to Variation 3 makes the switching redetermination whether mobile body 22 is switchable to the following control. To be more specific, in the switching redetermination, switching determiner 14 check a scheduled passage route that is a route scheduled to be taken by mobile body 21 to pass through the risk area, and determines whether or not the proportion of straight roads included in the scheduled passage route is at least a threshold value (the switching redetermination). In this case, based on the risk area information, the vehicle information, and the travel information, switching determiner 14 is able to check the scheduled passage route taken by mobile body 21 within the risk area. When the scheduled passage route of mobile body 21 has a large number of straight roads, it is determined that in the event that a remote operation needs to be performed on mobile body 21 followed by mobile body 22, the operation difficulty level for the operator is low. Thus, in this case, the control mode of mobile body 22 may be switched to the following control mode. In contrast, when the scheduled passage route of mobile body 21 has a low number of straight roads and a large number of right and left turns, it is determined that in the event that a remote operation needs to be performed on mobile body 21 followed by mobile body 22, the operation difficulty level for the operator is high. Thus, in this case, the control mode of mobile body 22 is not switched to the following control mode. Note that the operation difficulty level for the operator can be determined by determining whether straight roads make up, for example, at least 80% (the predetermined value) of the scheduled passage route of mobile body 21.

When it is determined that the proportion of the straight roads included in the scheduled passage route of mobile body 21 does not exceeds the threshold value, outputter 15 outputs, to mobile body 22, the instruction information for causing mobile body 22 to continue performing the individual control to travel independently of mobile body 21, instead of outputting the instruction information for causing mobile body 22 to perform the following control.

In contrast, when it is determined that the proportion of the straight roads included in the scheduled passage route of mobile body 21 is at least the threshold value, outputter 15 outputs, to mobile body 22, the instruction information for causing mobile body 22 to perform the following control.

In this way, based on the result of the switching redetermination made by switching determiner 14, outputter 15 generates and outputs, to mobile body 22, the instruction information for causing mobile body 22 to perform the individual control or the following control.

According to the present variation described above, when the route taken by mobile body 21 to pass through the risk area has many right and left turns, the operation difficulty level for the operator to perform the remote operation for causing mobile body 21 and mobile body 22 to travel together in the risk area is assumed to be high. On this account, the control mode of mobile body 22 is not switched to the following control mode. Thus, the mobile body targeted for remote operation in the risk area can be narrowed down only to mobile body 21 that is remotely operable with reliability.

### [Variation 4]

The switching redetermination may be made based on a surrounding situation of a place from which mobile body 21 enters the risk area, for example.

After making the basic determination that mobile body 22 will catch up with mobile body 21 before mobile body 21 enters the risk area, switching determiner 14 according to Variation 4 makes the switching redetermination whether mobile body 22 is switchable to the following control. To be more specific, in the switching redetermination, switching determiner 14 determines whether, until mobile body 22 catches up with mobile body 21, mobile body 21 is able to wait in a space in the vicinity of the travel route before entering the risk area (the switching redetermination).

In this case, the risk area information may include information indicating a situation in the vicinity of the risk area, such as whether there is parking space for a plurality of mobile bodies or whether the traffic volume is high or low. Based on the risk area information, the vehicle information, and the travel information, switching determiner 14 may check the surrounding situation of the place from which mobile body 21 enters the risk area. Then, based on the checked surrounding situation, switching determiner 14 may determine whether mobile body 21 is able to wait in a space in the vicinity of the travel route before entering the risk area.

Alternatively, switching determiner 14 may obtain information indicating the actual surrounding situation of the location from, for example, a camera of mobile body 21. Then, based on the obtained information, switching determiner 14 may check the actual surrounding situation of the location. Based on the actual surrounding situation of the location, switching determiner 14 may determine whether mobile body 21 is able to wait in a space in the vicinity of the travel route before entering the risk area.

Examples of the surrounding situation of the place from which mobile body 21 enters the risk area include: a situation where the traffic volume is low and the road is wide; and a situation where there is space allowing mobile body 21 to wait in until mobile body 22 catches up with mobile body 21. In such a situation, it is possible to cause mobile body 21 to wait for mobile body 22 to catch up. Then, in such a situation, the control mode of mobile body 22 may be switched to the following control mode.

When it is determined that there is no space allowing mobile body 21 to wait in, outputter 15 outputs, to mobile body 22, the instruction information for causing mobile body 22 to continue performing the individual control to travel independently of mobile body 21, instead of outputting the instruction information for causing mobile body 22 to perform the following control.

In contrast, when it is determined that there is space allowing mobile body 21 to wait in, outputter 15 outputs, to mobile body 22, the instruction information for causing mobile body 22 to perform the following control.

In this way, based on the result of the switching redetermination made by switching determiner 14, outputter 15 generates and outputs, to mobile body 22, the instruction information for causing mobile body 22 to maintain the individual control mode or switch to the following control mode.

According to the present variation described above, when there is no space allowing mobile body 21 to wait for mobile body 22 in because of, for example, the high traffic volume or the narrow road width, it is assumed that mobile body 21 is unable to safely wait until mobile body 22 catches up. On this account, even when mobile body 22 will catch up with mobile body 21 before mobile body 21 enters the risk area, the control mode of mobile body 22 is not switched to the following control mode in view of the safety of mobile body 21. Thus, the mobile body targeted for remote operation in the risk area can be narrowed down only to mobile body 21 that is remotely operable with reliability.

### [Variation 5]

The switching redetermination may be made based on skills and experiences of the operator who remotely operates mobile body 21, for example.

After making the basic determination that mobile body 22 will catch up with mobile body 21 before mobile body 21 enters the risk area, switching determiner 14 according to Variation 5 makes the switching redetermination whether mobile body 22 is switchable to the following control. To be more specific, in the switching redetermination, switching determiner 14 determines whether the skill level of the operator who performs at least one of remote operation or remote monitoring on mobile body 21 in the risk area exceeds a predetermined level (the switching redetermination). In this case, remote operation manager 17 may store information indicating the skill level of the operator, such as hours of experience of remote operation or a level corresponding to the hours of experience of remote operation. This allows switching determiner 14 to check, by reference to remote operation manager 17, the skill level of the operator who performs at least one of remote operation or remote monitoring on mobile body 21 in the risk area. For example, when an operator (a newcomer) that has less than 100 hours of experience is assigned as the operator who performs, for example, a remote operation on mobile body 21 followed by mobile body 22, this remote operation on mobile body 21 followed by mobile body 22 is likely to be determined to be difficult. On this account, when an operator who has less than 100 hours of experience is assigned as the operator who performs, for example, a remote operation on mobile body 21 followed by mobile body 22, the control mode of mobile body 22 is not switched to the following control mode.

When it is determined that the skill level of the aforementioned operator is less than or equal to a predetermined level, outputter 15 outputs, to mobile body 22, the instruction information for causing mobile body 22 to continue performing the individual control to travel independently of mobile body 21, instead of outputting the instruction information for causing mobile body 22 to perform the following control.

In contrast, when it is determined that the skill level of the aforementioned operator exceeds the predetermined level, outputter 15 outputs, to mobile body 22, the instruction information for causing mobile body 22 to perform the following control.

In this way, based on the result of the switching redetermination made by switching determiner 14, outputter 15 generates and outputs, to mobile body 22, the instruction information for causing mobile body 22 to maintain the individual control mode or switch to the following control mode.

According to the present variation described above, when the skill level of the operator is low because this operator is a newcomer for example, it may be expected that this operator is unable to cause mobile body 21 and mobile body 22 to travel safely together when remotely operating mobile body 21 followed by mobile body 22. On this account, even when mobile body 22 will catch up with mobile body 21 before mobile body 21 enters the risk area, the control mode of mobile body 22 is not switched to the following control mode in view of the skill level of the operator. Thus, the mobile body targeted for remote operation in the risk area can be narrowed down only to mobile body 21 that is remotely operable with reliability even by a new operator.

### [Variation 6]

The scheduled passage route of mobile body 21 and the scheduled passage route of mobile body 22 in the risk area may be completely identical in some cases and may diverge from each other at some point in others. For example, when the scheduled passage route of mobile body 21 and the scheduled passage route of mobile body 22 diverge from each other at some point in the risk area, information processing device 10 may perform the following control on mobile bodies 21 and 22 up to a diverging point and perform the individual control on mobile bodies 21 and 22 after the diverging point. In this case, a remote operation on mobile body 21 and a remote operation on mobile body 22 are independently performed from the diverging point by operators.

Alternatively, when the scheduled passage route of mobile body 21 and the scheduled passage route of mobile body 22 diverge from each other at some point in the risk area, information processing device 10 may perform the individual control instead of the following control. For example, after making the basic determination that mobile body 22 will catch up with mobile body 21 before mobile body 21 enters the risk area, switching determiner 14 may determine (make the switching redetermination) whether the scheduled passage route of mobile body 21 and the scheduled passage route of mobile body 22 diverge from each other at some point in the risk area.

When it is determined that the scheduled passage route of mobile body 21 and the scheduled passage route of mobile body 22 diverge from each other at some point in the risk area, outputter 15 outputs, to mobile body 22, the instruction information for causing mobile body 22 to continue performing the individual control to travel independently of mobile body 21, instead of outputting the instruction information for causing mobile body 22 to perform the following control. In contrast, when it is determined that the scheduled passage route of mobile body 21 and the scheduled passage route of mobile body 22 do not diverge from each other at any point in the risk area, outputter 15 outputs, to mobile body 22, the instruction information for causing mobile body 22 to perform the following control.

In this way, based on the result of the switching redetermination made by switching determiner 14, outputter 15 generates and outputs, to mobile body 22, the instruction information for causing mobile body 22 to maintain the individual control mode or switch to the following control mode.

With this, the control mode is adaptively switchable between the individual control mode and the following control mode, depending on whether the scheduled passage route of mobile body 21 and the scheduled passage route of mobile body 22 diverge from each other in the risk area.

Alternatively, when the scheduled passage route of mobile body 21 and the scheduled passage route of mobile body 22 diverge from each other at some point in the risk area, information processing device 10 may determine whether to perform the following control or the individual control, based on an overlapping distance between these scheduled passage routes in the risk area. To be more specific, the switching redetermination may be performed based on the overlapping distance that is a distance overlapping between the scheduled passage route of mobile body 21 and the scheduled passage route of mobile body 22 in the risk area.

For example, after making the basic determination that mobile body 22 will catch up with mobile body 21 before mobile body 21 enters the risk area, switching determiner 14 determines (makes the switching redetermination) whether the overlapping distance exceeds a threshold value.

The threshold value may be a fixed value, or may be defined base on the size of the risk area for example. Alternatively, the threshold value may be defined based on: the distance of the scheduled passage route of mobile body 21 in the risk area; the distance of the scheduled passage route of mobile body 22 in the risk area; or a fixed proportion with respect to a total of these distances.

When it is determined that the overlapping distance is less than or equal to the threshold value, outputter 15 outputs, to mobile body 22, the instruction information for causing mobile body 22 to continue performing the individual control to travel independently of mobile body 21, instead of outputting the instruction information for causing mobile body 22 to perform the following control. In contrast, when it is determined that the overlapping distance exceeds the threshold value, outputter 15 outputs, to mobile body 22, the instruction information for causing mobile body 22 to perform the following control.

In this way, based on the result of the switching redetermination made by switching determiner 14, outputter 15 generates and outputs, to mobile body 22, the instruction information for causing mobile body 22 to maintain the individual control mode or switch to the following control mode.

With this, the control mode is adaptively switchable between the individual control mode and the following control mode, depending on the divergence between the scheduled passage route of mobile body 21 and the scheduled passage route of mobile body 22 in the risk area.

Alternatively, when the scheduled passage route of mobile body 21 and the scheduled passage route of mobile body 22 diverge from each other at some point in the risk area, information processing device 10 may determine whether to perform the following control or the individual control, based on whether operator assignment is possible before the divergence. To be more specific, the switching redetermination may be made based on whether the operator assignment for each of mobile body 21 and mobile body 22 is possible before mobile body 21 and mobile body 22 reach the diverging point in the risk area.

For example, after making the basic determination that mobile body 22 will catch up with mobile body 21 before mobile body 21 enters the risk area, switching determiner 14 determines (makes the switching redetermination) whether the operator assignment is possible for each of mobile body 21 and mobile body 22 before the divergence. For example, switching determiner 14 may determine whether the operator assignment is possible, depending on whether there are a sufficient number of operators or whether available operators are present, for example.

When it is determined that the operator assignment is not possible, outputter 15 outputs, to mobile body 22, the instruction information for causing mobile body 22 to continue performing the individual control to travel independently of mobile body 21, instead of outputting the instruction information for causing mobile body 22 to perform the following control. In contrast, when it is determined that the operator assignment is possible, outputter 15 outputs, to mobile body 22, the instruction information for causing mobile body 22 to perform the following control.

In this way, based on the result of the switching redetermination made by switching determiner 14, outputter 15 generates and outputs, to mobile body 22, the instruction information for causing mobile body 22 to maintain the individual control mode or switch to the following control mode.

With this, the control mode is adaptively switchable between the individual control mode and the following control mode, depending on whether the operator assignment is possible for each of mobile body 21 and mobile body 22 that diverge from each other in the risk area.

### [Variation 7]

In Embodiments and Variations described above, the basic determination whether to switch the control mode of mobile body 22 is made before mobile body 21 enters the risk area. The timing of this determination is not limited to this.

For example, a remote operation may need to be performed on a mobile body (referred to as mobile body A) among a plurality of mobile bodies each of which autonomously travels in the individual control mode in the risk area. The plurality of mobile bodies may include mobile body B that is located in the vicinity of mobile body A and able to join with mobile body A. In this case, at the time when mobile body B joins with mobile body A, remote control system 100 may cause mobile body B to switch to the following control mode to follow mobile body A. Here, the switching may be enabled when there is space for mobile body A and mobile body B to join together in.

With this, remote control system 100 is able to assign an operator to the mobile body waiting in front of the risk area, without assigning an operator to mobile body B. This increases the utilization rates of the plurality of mobile bodies.

### [Embodiment 3]

When a plurality of mobile bodies 22 will catch up with one mobile body 21 before this mobile body 21 enters the risk area, the number of mobile bodies 22 following mobile body 21 may be determined or mobile bodies 22 caused to follow mobile body 21 may be selected.

FIG. 10 is a flowchart illustrating an example of basic determination processing performed by information processing device 10 according to Embodiment 3.

As illustrated in FIG. 10, information processing device 10 first makes the basic determination (S100). Step S100 has been described in detail with reference to FIG. 6 according to Embodiment 1, and thus the description thereof is omitted here. Note that, by the basic determination according to the present embodiment, the plurality of mobile bodies 22 are determined and it is also determined that the plurality of mobile bodies 22 will catch up with mobile body 21.

When it is determined in Step S100 that, as a result of the basic determination, the control mode of mobile body 22 is switched to the following control mode ("Switch to following control" in S100), information processing device 10 determines the number of follower mobile bodies performing the following control, that is, the number of mobile bodies 22 caused to switch to the following control mode to follow mobile body 21 (S301). The number of follower mobile bodies may be determined by the operator who performs a remote operation or the like on mobile body 21, or may be automatically determined. Examples of criteria for determining the number of follower mobile bodies include: characteristics of the scheduled passage route taken by mobile body 21 to pass through the risk area; a risk caused by the following control performed by mobile bodies 22 in the risk area; and sizes of mobile body 21 and mobile bodies 22. Furthermore, examples of the criteria for determining the number of follower mobile bodies may also include skills or experiences of the operator who remotely operates mobile body 21.

For example, suppose that the characteristics of the scheduled passage route taken by mobile body 21 to pass through the risk area are used as the criteria for determining the number of follower mobile bodies. For the scheduled passage road having a significant proportion of straight roads, the number of mobile bodies 22 caused to follow mobile body 21 may be maximized.

For example, suppose that the risk caused by the following control performed by mobile bodies 22 in the risk area is used as the criteria for determining the number of follower mobile bodies. In the event that this risk is high, the number of mobile bodies 22 caused to follow mobile body 21 may be minimized.

For example, suppose that the sizes of mobile body 21 and mobile bodies 22 are used as the criteria for determining the number of follower mobile bodies. In this case, the number of mobile bodies 22 caused to follow mobile body 21 may be maximized, provided that the total length of mobile body 21 and mobile bodies 22 following mobile body 21 does not exceed a threshold value.

For example, suppose that the skills or experiences of the operator who remotely operates mobile body 21 are used as the criteria for determining the number of follower mobile bodies. In this case, the number of mobile bodies 22 caused to follow mobile body 21 may be a possible maximum number, provided that the remote operation on mobile body 21 followed by mobile bodies 22 is performed safely with the skills or experiences of this operator.

As described above, when the plurality of mobile bodies 22 are determined and it is also determined that the plurality of mobile bodies 22 will catch up with mobile body 21 before mobile body 21 enters the risk area, information processing device 10 may also determine the number of mobile bodies 22 that are caused to follow mobile body 21, among the plurality of mobile body 22. Then, when outputting the instruction information for the following control, information processing device 10 may also output, to the determined number of mobile bodies 22, the instruction information for causing the determined number of mobile bodies 22 to perform the following control. For example, when a large number of mobile bodies 22 follow mobile body 21, it may be expected that mobile body 21 and mobile bodies 22 are unable to travel safely together, depending on the skill level of the operator or the situation of the travel route. On this account, even when the plurality of mobile bodies 22 will catch up with mobile body 21 before mobile body 21 enters the risk area, the determination of the number of mobile bodies 22 caused to follow mobile body 21 enables mobile body 21 and the determined number of mobile bodies 22 to travel safely together.

FIG. 11 is a flowchart illustrating another example of the basic determination processing performed by information processing device 10 according to Embodiment 3.

As illustrated in FIG. 11, information processing device 10 first makes the basic determination (S100). Step S100 has been described in detail with reference to FIG. 6, and thus the description thereof is omitted here. Note that, by the basic determination according to the present embodiment, the plurality of mobile bodies 22 are determined and it is also determined that the plurality of mobile bodies 22 will catch up with mobile body 21.

When it is determined in Step S100 that, as a result of the basic determination, the control mode of mobile body 22 is switched to the following control mode ("Switch to following control" in S100), information processing device 10 requests the operator to verify the following control (S302). More specifically, to verify the following control, information processing device 10 requests the operator who performs a remote operation or the like on mobile body 21 to select mobile bodies 22 caused to follow mobile body 21. Note that information processing device 10 may also request the operator to decide start timing for mobile body 21, followed by mobile bodies 22 performing the following control, to enter the risk area. With this, the travel of mobile body 21 can be started after the safety of surrounding environment is verified according to standards stricter than standards applied for the individual control performed on mobile body 21.

In this way, when the plurality of mobile bodies 22 are determined and it is also determined that the plurality of mobile bodies 22 will catch up with mobile body 21 before mobile body 21 enters the risk area, information processing device 10 may also select mobile bodies 22 caused to perform the following control among the plurality of mobile bodies 22. Then, when outputting the instruction information for the following control, information processing device 10 may output, to mobile bodies 22 selected, the instruction information for causing mobile bodies 22 to perform the following control. With this, even when the plurality of mobile bodies 22 will catch up with mobile body 21 before mobile body 21 enters the risk area, the selection of mobile bodies 22 caused to follow mobile body 21 enables mobile body 21 and mobile bodies 22 selected to travel safely together.

### (OTHER EMBODIMENTS)

Although the information processing method and the like according to one or more aspects of the present disclosure have been described based on the embodiments and variations, the present disclosure is not limited to the embodiments and variations. Those skilled in the art will readily appreciate that embodiments arrived at by making various modifications to the above embodiments and variations or embodiments arrived at by selectively combining elements disclosed in the above embodiments and variations without materially departing from the scope of the present disclosure may be included within one or more aspects of the present disclosure.

In the above-described embodiments and variations, steps in the processing performed by a certain constituent element may be performed by another constituent element, an order of steps may be changed, or a plurality of steps may be performed in parallel. The ordinal numbers, such as "the first" and "the second", used in the explanation may be changed, removed, or newly added, as needed. Such ordinal numbers do not mean an order of elements, but may be used to identify the elements.

Each of the elements in each of the above embodiments may be configured in the form of an exclusive hardware product, or may be realized by executing a software program suitable for the element. Each of the constituent elements may be realized by means of a program executing unit, such as a Central Processing Unit (CPU) or a processor, reading and executing the software program recorded on a recording medium such as a hard disk or semiconductor memory. Here, software realizing the device or the like in the above-described embodiments is a program for causing a computer to execute the steps included in the flowchart shown in FIG. 5.

Moreover, the following is also included in the present disclosure.
(1) At least one device described above may be a computer system including a microprocessor, a Read Only Memory (ROM), a Random Access Memory (RAM), a hard disk unit, a display unit, a keyboard, a mouse, and the like. The RAM or the hard disk unit holds a computer program. The microprocessor operates according to the computer program, thereby causing the at least one device to execute its functions. Here, the computer program includes combinations of instruction codes for issuing instructions to the computer to execute predetermined functions.
(2) It should also be noted that a part or all of the constituent elements in at least one device described above may be implemented into a single Large Scale Integration (LSI). The system LSI is a super multi-function LSI that is a single chip into which a plurality of constituent elements are integrated. More specifically, the system LSI is a computer system including a microprocessor, a ROM, a RAM, and the like. The RAM holds a computer program. The microprocessor operates according to the computer program, thereby causing the system LSI to execute its functions.
(3) It should also be noted that a part or all of the constituent elements included in at least one device described above may be implemented into an Integrated Circuit (IC) card or a single module which is attachable to and removable from the device. The IC card or the module is a computer system including a microprocessor, a ROM, a RAM, and the like. The IC card or the module may include the above-described super multi-function LSI. The microprocessor operates according to the computer program to cause the IC card or the module to execute its functions. The IC card or the module may have tamper resistance.
(4) The present disclosure may be the above-above described methods. These methods may be a computer program executed by a computer, or digital signals forming the computer program.

The present disclosure may be a computer-readable recording medium on which the computer program or the digital signals are recorded. Examples of the computer-readable recording medium are a flexible disk, a hard disk, a Compact Disc-Read Only Memory (CD-ROM), a Digital Versatile Disc (DVD), a DVD-ROM, a DVD-RAM, a BD (Blu-ray(registered trademark) Disc), and a semiconductor memory. The present disclosure may be the digital signals recorded on the recording medium.

The present disclosure may be implemented by transmitting the computer program or the digital signals via an electric communication line, a wired or wireless communication line, a network represented by the Internet, data broadcasting, and the like.

It is also possible that the program or the digital signals may be recorded onto the recording medium to be transferred, or may be transmitted via a network or the like, so that the program or the digital signals can be executed by a different independent computer system.

### [Industrial Applicability]

The present disclosure is applicable to a method of outputting control information for controlling a mobile body, for example.

### [Reference Signs List]

- 1: remote control server
- 5: network
- 10: information processing device
- 11: obtainer
- 12: predictor
- 13: identifier
- 14: switching determiner
- 15: outputter
- 16: storage
- 17: remote operation manager
- 18: remote operation assigner
- 19: remote operator
- 21, 22: mobile body
- 31: remote operation device
- 50: risk area
- 100: remote control system

## Claims

1. An information processing method comprising:
obtaining travel information on travel of at least two mobile bodies that are capable of autonomous travel and operable by at least one of remote operation or remote monitoring;
predicting, based on the travel information and location information on a first area in which at least one of the remote operation or the remote monitoring is required, a first mobile body that has a travel route scheduled to pass through the first area and that is scheduled to enter the first area, among the at least two mobile bodies;
identifying, based on the travel information and the location information, a second mobile body that is different from the first mobile body and that has a travel route scheduled to pass through the first area;
determining whether the second mobile body will catch up with the first mobile body before the first mobile body enters the first area; and
outputting, to the second mobile body, instruction information for causing the second mobile body to perform following control to follow the first mobile body, when the determining is made that the second mobile body will catch up with the first mobile body before the first mobile body enters the first area.

2. The information processing method according to claim 1, further comprising:
outputting, to the second mobile body, instruction information for causing the second mobile body to continue performing individual control to travel independently of the first mobile body, when the determining is made that the second mobile body will not catch up with the first mobile body before the first mobile body enters the first area.

3. The information processing method according to claim 1,
wherein in the determining whether the second mobile body will catch up with the first mobile body, whether the second mobile body will catch up with the first mobile body is determined based on (i) a waiting time period that is a time period from when the first mobile body reaches the first area to when the first mobile body enters the first area and a catching-up time period that is a time period from a first time at which the first mobile body reaches the first area to a second time at which the second mobile body reaches a location of the first mobile body, or based on (ii) a distance on a route between the first mobile body and the second mobile body and a reference value for the distance.

4. The information processing method according to claim 3,
wherein the second time is a time at which the second mobile body reaches the location of the first mobile body by autonomously traveling at an accelerated speed.

5. The information processing method according to any one of claims 1 to 4, further comprising:
when the determining is made that the second mobile body will catch up with the first mobile body before the first mobile body enters the first area,
calculating, based on a situation of the first area, a risk caused by the following control performed by the second mobile body in the first area, and determining whether the risk calculated exceeds a predetermined reference value,
wherein when the determining is made that the risk calculated exceeds the predetermined reference value, the outputting of the instruction information for causing the second mobile body to perform the following control is not performed.

6. The information processing method according to claim 5,
wherein the risk indicates a difficulty level of performing the remote operation on the first mobile body while causing the second mobile body to perform the following control in the first area.

7. The information processing method according to any one of claims 1 to 4, further comprising:
when the determining is made that the second mobile body will catch up with the first mobile body before the first mobile body enters the first area,
determining whether a total number of times that is included in a past history of a mobile body which previously passed through the first area and that indicates a total number of stops having been made by the mobile body autonomously traveling in the first area exceeds a threshold value,
wherein when the determining is made that the total number of times exceeds the threshold value, the outputting of the instruction information for causing the second mobile body to perform the following control is not performed.

8. The information processing method according to any one of claims 1 to 4, further comprising:
when the determining is made that the second mobile body will catch up with the first mobile body before the first mobile body enters the first area,
determining whether a length of a scheduled passage route that is a route scheduled to be taken by the first mobile body to pass through the first area exceeds a predetermined value,
wherein when the determining is made that the length of the scheduled passage route exceeds the predetermined value, the outputting of the instruction information for causing the second mobile body to perform the following control is not performed.

9. The information processing method according to any one of claims 1 to 4, further comprising:
when the determining is made that the second mobile body will catch up with the first mobile body before the first mobile body enters the first area,
checking a scheduled passage route that is a route scheduled to be taken by the first mobile body to pass through the first area; and
determining whether or not a proportion of one or more straight roads included in the scheduled passage route is at least a threshold value,
wherein when the determining is made that the proportion of the one or more straight roads included in the scheduled passage route does not exceed the threshold value, the outputting of the instruction information for causing the second mobile body to perform the following control is not performed.

10. The information processing method according to any one of claims 1 to 4, further comprising:
when the determining is made that the second mobile body will catch up with the first mobile body before the first mobile body enters the first area,
determining whether the first mobile body is able to wait in a space in a vicinity of the travel route before entering the first area until the second mobile body catches up with the first mobile body,
wherein when the determining is made that the first mobile body is unable to wait, the outputting of the instruction information for causing the second mobile body to perform the following control is not performed.

11. The information processing method according to any one of claims 1 to 4, further comprising:
when the determining is made that the second mobile body will catch up with the first mobile body before the first mobile body enters the first area,
determining whether a skill level of an operator who performs at least one of the remote operation or the remote monitoring on the first mobile body in the first area exceeds a predetermined level,
wherein when the determining is made that the skill level does not exceed the predetermined level, the outputting of the instruction information for causing the second mobile body to perform the following control is not performed.

12. The information processing method according to any one of claims 1 to 4,
wherein in the determining of the second mobile body, each of a plurality of second mobile bodies is determined as the second mobile body, and
the information processing method further comprises:
determining a total number of at least one second mobile body caused to perform the following control among the plurality of second mobile bodies when the determining is made that the plurality of second mobile bodies will catch up with the first mobile body before the first mobile body enters the first area,
wherein the outputting of the instruction information for causing the at least one second mobile body defined by the total number determined to perform the following control is performed.

13. The information processing method according to any one of claims 1 to 4,
wherein in the determining of the second mobile body, each of a plurality of second mobile bodies is determined as the second mobile body, and
the information processing method further comprises:
selecting a second mobile body caused to perform the following control from among the plurality of second mobile bodies when the determining is made that the plurality of second mobile bodies will catch up with the first mobile body before the first mobile body enters the first area,
wherein in the outputting, the instruction information for causing the second mobile body selected to perform the following control is outputted to the second mobile body selected.

14. An information processing device comprising:
an obtainer that obtains travel information on travel of at least two mobile bodies that are capable of autonomous travel and operable by at least one of remote operation or remote monitoring;
a predictor that predicts, based on the travel information and location information on a first area in which at least one of the remote operation or the remote monitoring is required, a first mobile body that has a travel route scheduled to pass through the first area and that is scheduled to enter the first area, among the at least two mobile bodies;
an identifier that identifies, based on the travel information and the location information, a second mobile body that is different from the first mobile body and that has a travel route scheduled to pass through the first area;
a determiner that determines whether the second mobile body will catch up with the first mobile body before the first mobile body enters the first area; and
an outputter that outputs, to the second mobile body, instruction information for causing the second mobile body to perform following control to follow the first mobile body, when the determiner determines that the second mobile body will catch up with the first mobile body before the first mobile body enters the first area.

15. A computer program for causing a computer to execute:
obtaining travel information on travel of at least two mobile bodies that are capable of autonomous travel and operable by at least one of remote operation or remote monitoring;
predicting, based on the travel information and location information on a first area in which at least one of the remote operation or the remote monitoring is required, a first mobile body that has a travel route scheduled to pass through the first area and that is scheduled to enter the first area, among the at least two mobile bodies;
identifying, based on the travel information and the location information, a second mobile body that is different from the first mobile body and that has a travel route scheduled to pass through the first area;
determining whether the second mobile body will catch up with the first mobile body before the first mobile body enters the first area; and
outputting, to the second mobile body, instruction information for causing the second mobile body to perform following control to follow the first mobile body, when the determining is made that the second mobile body will catch up with the first mobile body before the first mobile body enters the first area.
